# EUROPEAN PATENT SPECIFICATION

(11) **EP 3 090 310 B1**
(45) Date of publication and mention of the grant of the patent: **14.02.2024**
(21) Application number: 14876073.9
(22) Date of filing: 31.12.2014
(51) Int. Cl.: G02F 1/15, B32B 17/10

(54) **THIN-FILM DEVICES AND FABRICATION**
DÜNNSCHICHTVORRICHTUNGEN UND HERSTELLUNG
DISPOSITIFS À COUCHES MINCES ET FABRICATION DE CEUX-CI

(30) Priority: 02.01.2014 US 201461923171 P; 04.06.2014 US 201414362863
(43) Date of publication of application: 09.11.2016
(73) Proprietor: View, Inc., Milpitas, CA 95035 (US); Corning Incorporated, Corning, New York 14831 (US)
(72) Inventor: TRAN, Tom Toan-Cong, San Jose, California 95138 (US); GRIEDEL, Brian D., Milpitas, California 95035 (US); ROZBICKI, Robert T., Germantown, Tennessee 38138 (US); MARTIN, Todd, Mountain View, California 94040 (US)
(74) Representative: Haseltine Lake Kempner LLP
(86) International application number: PCT/US2014/073081
(87) International publication number: WO 2015/103433

(56) References cited:
- WO-A1-2012/157610
- WO-A1-2013/090209
- WO-A1-2013/090209
- WO-A1-2013/151035
- US-A1- 2011 267 672
- US-A1- 2011 267 672
- US-A1- 2012 156 457
- US-A1- 2012 182 593
- US-A1- 2013 114 219

## Description

This application claims priority to U.S. Provisional Patent Application No. 61/923,171, titled "THIN-FILM DEVICES AND FABRICATION," filed on January 2, 2014 and is a continuation-in-part application of U.S. Patent Application No. 14/362,863, titled "THIN-FILM DEVICES AND FABRICATION," filed on June 4, 2014, which claims priority to PCT/US12/68817, titled "THIN-FILM DEVICES AND FABRICATION," filed on December 10, 2012, which claims priority to U.S. Provisional Patent Application No. 61/569,716, titled "THIN-FILM DEVICES AND FABRICATION," filed on December 12, 2011, U.S. Provisional Patent Application No. 61/664,638, titled "THIN-FILM DEVICES AND FABRICATION," filed on June 26, 2012, and U.S. Provisional Patent Application No. 61/709,046, titled "THIN-FILM DEVICES AND FABRICATION," filed on October 2, 2012.

### FIELD

Embodiments disclosed herein relate generally to optical devices, and more particularly to methods of fabricating optical devices.

### BACKGROUND

Electrochromism is a phenomenon in which a material exhibits a reversible electrochemically-mediated change in an optical property when placed in a different electronic state, typically by being subjected to a voltage change. The optical property is typically one or more of color, transmittance, absorbance, and reflectance. For example, one well known electrochromic material is tungsten oxide (WO₃). Tungsten oxide is a cathodically coloring electrochromic material in which a coloration transition, bleached (non-colored) to blue, occurs by electrochemical reduction. When electrochemical oxidation takes place, tungsten oxide transitions from blue to a bleached state.

Electrochromic materials may be incorporated into, for example, windows for home, commercial and other uses. The color, transmittance, absorbance, and/or reflectance of such windows may be changed by inducing a change in the electrochromic material, that is, electrochromic windows are windows that can be darkened and lightened reversibly via application of an electric charge. A small voltage applied to an electrochromic device of the window will cause it to darken; reversing the voltage causes it to lighten. This capability allows control of the amount of light that passes through the windows, and presents an opportunity for electrochromic windows to be used as energy-saving devices.

While electrochromism was discovered in the 1960's, electrochromic devices, and particularly electrochromic windows, still unfortunately suffer various problems and have not begun to realize their full commercial potential despite many recent advancements in electrochromic technology, apparatus, and related methods of making and/or using electrochromic devices.
WO 2013/090209 A1 describes thin-film devices, for example electrochromic devices for windows, and methods of manufacturing. Particular focus is given to methods of patterning optical devices. Various edge deletion and isolation scribes are performed, for example, to ensure the optical device has appropriate isolation from any edge defects. Methods described apply to any thin-film device having one or more material layers sandwiched between two thin film electrical conductor layers.
WO 2013/151035 A1 describes an optical display device production system provided with: bonding units which bond sheet pieces cut from an optical member sheet wider than the display region of an optical display member to a first surface and a second surface of said optical display member; and a cutting unit which, from the sheet pieces bonded to the first surface and second surface of said optical display member, cuts away the excess portion arranged outside of the portion of the sheet pieces that corresponds to the display region, and which forms an optical member having a size corresponding to the display region on first surface and a second surface of said optical display member.
US 2011/267672 A1 describes electrochromic device laminates and their method of manufacture.
US 2012/156457 A1 describes a laminated structure including: a flexible base material having a first main surface and a second main surface and having a thickness of 0.3 mm or less; a supporting substrate; and a cured silicone resin layer provided between the flexible base material and the supporting substrate and having a peelable surface, in which the cured silicone resin layer is fixed onto a first main surface of the supporting substrate, has easy peelability against the first main surface of the flexible base material, and is adhered closely to the first main surface of the flexible base material.

### SUMMARY

Thin-film devices, for example, electrochromic devices for windows, and methods of manufacturing are described. Particular focus is given to methods of patterning and fabricating optical devices. Various edge deletion and isolation scribes are performed, for example, to ensure the optical device has appropriate isolation from any edge defects, but also to address unwanted coloration and charge buildup in areas of the device. Edge treatments are applied to one or more layers of optical devices during fabrication. Methods described herein apply to any thin-film device having one or more material layers sandwiched between two thin-film electrical conductor layers. The described methods create novel optical device configurations.

One embodiment is an optical device including: (i) a first conductor layer on a substrate, the first conductor layer including an area less than that of the substrate, the first conductor layer surrounded by a perimeter area of the substrate which is substantially free of the first conductor layer; (ii) one or more material layers including at least one optically switchable material, the one or more material layers configured to be within the perimeter area of the substrate and co-extensive with the first conductor layer but for at least one exposed area of the first conductor layer, the at least one exposed area of the first conductor layer free of the one or more material layers; and (iii) a second conductor layer on the one or more material layers, the second conductor layer transparent and co-extensive with the one or more material layers, where the one or more material layers and the second conductor layer overhang the first conductor layer but for the at least one exposed area of the first conductor layer. The optical device may further include a vapor barrier layer coextensive with the second conductor layer. The optical device may include a diffusion barrier between the first conductor layer and the substrate. In certain embodiments, the optical device is fabricated on low-sodium glass, e.g., commercially available low sodium annealed thin glass. In some embodiments, the optical device does not include an isolation scribe, i.e., there are no inactive portions of the device isolated by a scribe.

In certain embodiments, the at least one optically switchable material is an electrochromic material. The first and second conductor layers may both be transparent, but at least one is transparent. In certain embodiments, the optical device is all solid-state and inorganic. The substrate may be float glass, tempered or not.

Certain embodiments include an insulated glass unit (IGU) which includes optical devices described herein. In certain embodiments, any exposed areas of the first conducting layer are configured to be within the primary seal of the IGU. In certain embodiments, any bus bars are also configured to be within the primary seal of the IGU. In certain embodiments, any isolation or other scribes are also within the primary seal of the IGU. Optical devices described herein may be of any shape, e.g., regular polygon shaped such as rectangular, round or oval, triangular, trapezoidal, etc., or irregularly-shaped.

Some embodiments are methods of making optical devices as defined in the appended claims. One embodiment is a method of fabricating an optical device including one or more material layers sandwiched between a first and a second conducting layer, the method including: (i) receiving a substrate including the first conducting layer over its work surface (e.g., an underlying glass layer with or without a diffusion barrier); (ii) removing a first width of the first conducting layer from between about 10% and about 90% of the perimeter of the substrate; (iii) depositing the one or more material layers of the optical device and the second conducting layer such that they cover the first conducting layer and, where possible (except where the portion the substrate where the first conducting layer was not removed), extend beyond the first conducting layer about its perimeter; (iv) removing a second width, narrower than the first width, of all the layers about substantially the entire perimeter of the substrate, where the depth of removal is at least sufficient to remove the first conducting layer; (v) removing at least one portion of the second transparent conducting layer and the one or more layers of the optical device thereunder thereby revealing at least one exposed portion of the first conducting layer; and (vi) applying an electrical connection, e.g. a bus bar, to the at least one exposed portion of the first transparent conducting layer; where at least one of the first and second conducting layers is transparent.

In one embodiment, (ii) includes removing the first width of the first conducting layer from between about 50% and about 75% around the perimeter of the substrate. In one embodiment, the at least one exposed portion of the first conducting layer exposed is fabricated along the perimeter portion of the optical device proximate the side or sides of the substrate where the first conducting layer was not removed in (ii). Methods may further include applying at least one additional electrical connection (e.g., a second bus bar) to the second conducting layer. Aspects of methods described herein may be performed in an all vacuum integrated deposition apparatus. Methods may further include fabricating an IGU using optical devices as described herein.

Certain embodiments include fabrication methods, and resulting devices, having particular edge treatments which create more robust and better performing devices. For example the edge of an electrochromic device layer or layers may be tapered in order to avoid stress and cracking in overlying layers of the device construct. In another example, lower conductor exposure for bus bar application is carried out to ensure good electrical contact and uniform coloration front in the electrochromic device. In certain embodiments, device edge treatments, isolation scribes and lower conductor layer exposures are performed using variable depth laser scribes.

These and other features and advantages will be described in further detail below, with reference to the associated drawings.

### BRIEF DESCRIPTION OF THE DRAWINGS

The following detailed description can be more fully understood when considered in conjunction with the drawings in which:
**Figures 1A, 1B****,** and **1C** are cross-section, end view, and top view drawings respectively of an electrochromic device fabricated on a glass substrate.
**Figure 1D** is a detailed portion of the cross-section shown in **Figure 1A**.
**Figure 2A** is a partial cross-section of an improved electrochromic device architecture on a substrate.
**Figures 2B-2C**-are cross-sectional and end view drawings respectively of an improved device architecture similar to that described in relation to **Figure 2A**.
**Figures 2D-2E** are partial cross-sectional and top view drawings respectively of a device with an architecture similar to that described in relation to **Figures 2A-C.**
**Figure 3** is a partial cross-section showing an improved device architecture where the diffusion barrier is removed along with the lower conducting layer.
**Figure 4A** is a flowchart of a process flow describing aspects of a method of fabricating an electrochromic device.
**Figure 4B** are top views depicting steps in the process flow described in relation to **Figure 4A**.
**Figure 4C** depicts cross-sections of the electrochromic lite described in relation to **Figure 4B**.
**Figure 4D** is a top view schematic depicting steps during fabrication on a round substrate.
**Figure 4E** is a top view schematic depicting steps during fabrication of an electrochromic device.
**Figure 4F** is a schematic drawing in the perspective view depicting fabrication of an IGU with an optical device.
**Figure 4G** is a schematic drawing of top views of devices similar to that described in relation to **Figure 4B**.
**Figures 4H** and **4I** are schematic drawings depicting steps of a process flow similar to that described in relation to **Figure 4A** and carried out on a large-area substrate as applied to coat then cut methods.
**Figure 4J** is a drawing depicting roll-to-roll processing forming laminates of electrochromic devices where the lamination uses a flexible mate lite.
**Figure 4K** is a flowchart of a process flow describing aspects of a method of fabricating an optical device, according to the present invention, where a laminate substrate is fabricated first, followed by fabrication of the optical device thereon.
**Figure 4L** depicts a top view of a lamination apparatus.
**Figures 4M** and **4N** depicts processing of laminates and laminates formed thereby, respectively.
**Figures 4O**and **4P** are cross sections showing various edge types and treatments as described herein.
**Figure 4Q** depicts an IGU fabrication assembly line.
**Figure 4R** depicts a process flow.
**Figure 5A** is a flowchart of a process flow describing aspects of a method of fabricating an optical device having opposing bus bars on each of first and second conductor layers.
**Figure 5B** is a schematic of top-views depicting steps in the process flow described in relation to **Figure 5A**.
**Figure 5C** shows cross-sections of the electrochromic lite described in relation to **Figure 5B**.
**Figures 5D** and **5E** are top view schematics of electrochromic devices.
**Figures 5F** and **5G** are schematic drawings depicting steps in a process flow similar to that described in relation to **Figure 5A** and carried out on a large-area substrate as applied to coat then cut methods.
**Figure 6A** is a schematic drawing depicting roll-to-roll fabrication of electrochromic devices on flexible substrates and optional lamination with rigid substrates.
**Figure 6B** is a schematic drawing depicting lamination of electrochromic devices on flexible glass substrates and lamination with flexible substrates.
**Figure 7** includes cross-sectional views of an electrochromic device similar to the device described in relation to **Figure 4C**, detailing problematic issues.
**Figures 8A** and **8B** is a cross-sectional and top view respectively of an electrochromic device describing tapering the edge(s) of the lower conductor layer in order to avoid stress in subsequently deposited overlying layers.
**Figures 9A** and **9B** are drawings depicting problematic issues related to exposure of a lower conductor for bus bar application.
**Figures 10A** through **10F** are drawings depicting improved bus bar pad exposure.

### DETAILED DESCRIPTION

Embodiments of the present invention are defined in the claims. Embodiments in this description, which do not include all the features of one of the independent claims, are not according to the claims. For the purposes of brevity, embodiments are described in terms of electrochromic devices; however, the scope of the disclosure is not so limited. One of ordinary skill in the art would appreciate that methods described can be used to fabricate virtually any thin-film device where one or more layers are sandwiched between two thin-film conductor layers. Certain embodiments are directed to optical devices, that is, thin-film devices having at least one transparent conductor layer. In the simplest form, an optical device includes a substrate and one or more material layers sandwiched between two conductor layers, one of which is transparent. In one embodiment, an optical device includes a transparent substrate and two transparent conductor layers. In another embodiment, an optical device includes a transparent substrate upon which is deposited a transparent conductor layer (the lower conductor layer) and the other (upper) conductor layer is not transparent. In another embodiment, the substrate is not transparent, and one or both of the conductor layers is transparent. Some examples of optical devices include electrochromic devices, flat panel displays, photovoltaic devices, suspended particle devices (SPD's), liquid crystal devices (LCD's), and the like. For context, a description of electrochromic devices is presented below. For convenience, all solid-state and inorganic electrochromic devices are described; however, embodiments are not limited in this way.

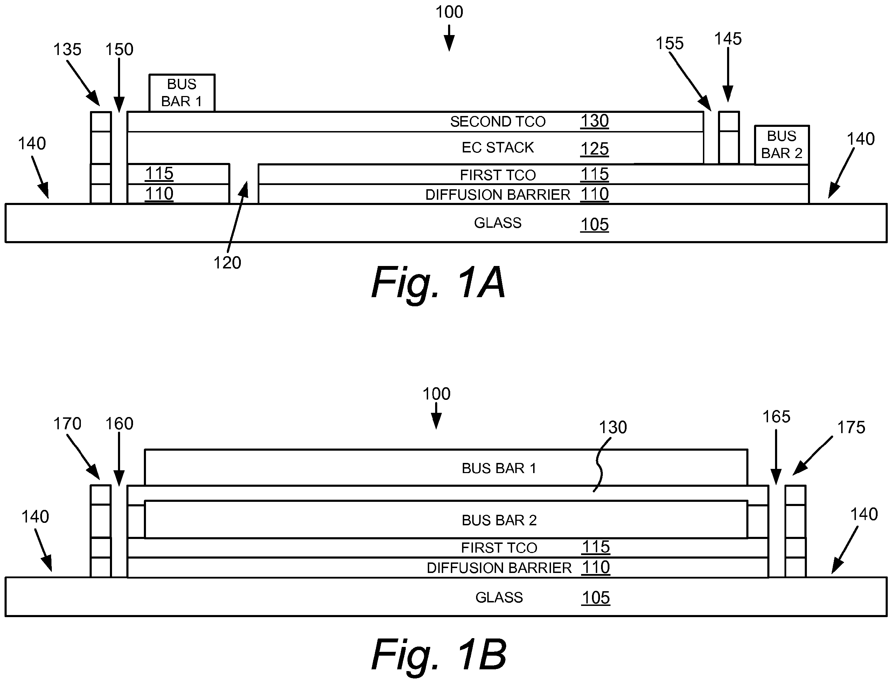

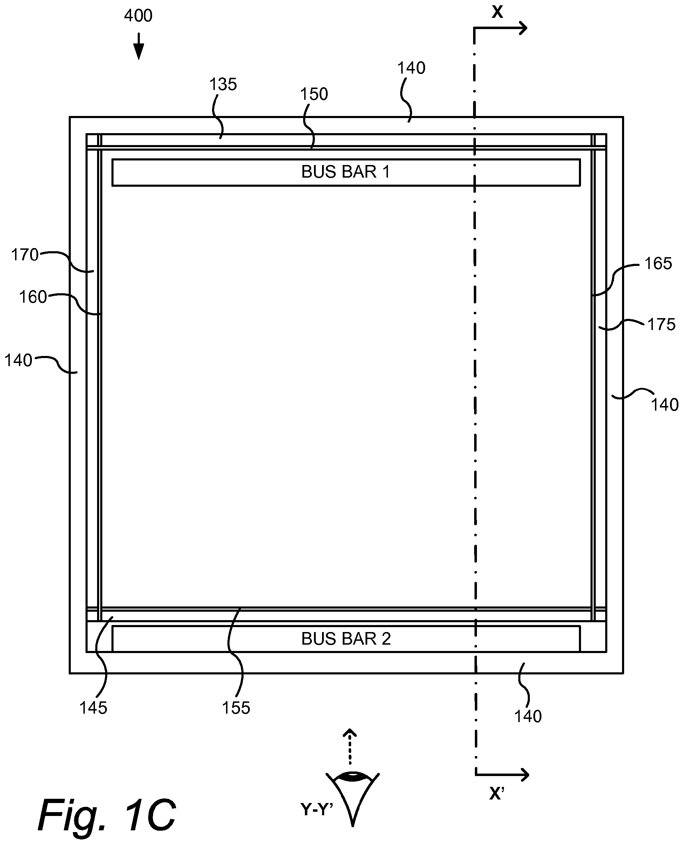

A particular example of an electrochromic lite is described with reference to **Figures 1A-1D****.** The electrochromic lite includes an electrochromic device fabricated on a substrate. **Figure 1A** is a cross-sectional representation (see cut X-X' of **Figure 1C**) of an electrochromic lite, **100,** which is fabricated starting with a glass sheet, **105.** **Figure 1B** shows an end view (see perspective Y-Y' of **Figure 1C**) of electrochromic lite **100,** and **Figure 1C** shows a top-down view of electrochromic lite **100.**

**Figure 1A** shows the electrochromic lite **100** after fabrication on glass sheet **105** and the edge has been deleted to produce area **140** around the perimeter of the lite. Edge deletion refers to removing one or more material layers from the device about some perimeter portion of the substrate. Typically, though not necessarily, edge deletion removes material down to and including the lower conductor layer (e.g., layer **115** in the example depicted in **Figures 1A-1D**), and may include removal of any diffusion barrier layer(s) down to the substrate itself. In **Figures 1A-1B****,** the electrochromic lite **100** has also been laser scribed and bus bars have been attached. The glass lite, **105,** has a diffusion barrier, **110,** and a first transparent conducting oxide (TCO) **115** on the diffusion barrier.

In this example, the edge deletion process removes both TCO **115** and diffusion barrier **110,** but in other embodiments, only the TCO is removed, leaving the diffusion barrier intact. The TCO layer **115** is the first of two conductive layers used to form the electrodes of the electrochromic device fabricated on the glass sheet. In some examples, the glass sheet may be prefabricated with the diffusion barrier formed over underlying glass. Thus, the diffusion barrier is formed, and then the first TCO **115,** an EC stack **125** (e.g., stack having electrochromic, ion conductor, and counter electrode layers), and a second TCO, **130,** are formed. In other examples, the glass sheet may be prefabricated with both the diffusion barrier and the first TCO **115** formed over underlying glass.

In certain embodiments, one or more layers may be formed on a substrate (e.g., glass sheet) in an integrated deposition system where the substrate does not leave the integrated deposition system at any time during fabrication of the layer(s). In one embodiment, an electrochromic device including an EC stack and a second TCO may be fabricated in the integrated deposition system where the glass sheet does not leave the integrated deposition system at any time during fabrication of the layers. In one case, the first TCO layer may also be formed using the integrated deposition system where the glass sheet does not leave the integrated deposition system during deposition of the EC stack, and the TCO layer(s). In one embodiment, all of the layers (e.g., diffusion barrier, first TCO, EC stack, and second TCO) are deposited in the integrated deposition system where the glass sheet does not leave the integrated deposition system during deposition. In this example, prior to deposition of EC stack **125,** an isolation trench, **120,** may be cut through first TCO **115** and diffusion barrier **110.** Trench **120** is made in contemplation of electrically isolating an area of first TCO **115** that will reside under bus bar 1 after fabrication is complete (see **Figure 1A**). Trench **120** is sometimes referred to as the "L1" scribe, because it is the first laser scribe in certain processes. This is done to avoid charge buildup and coloration of the EC device under the bus bar, which can be undesirable. This undesirable result is explained in more detail below and was the impetus for certain embodiments described herein. That is, certain embodiments are directed toward eliminating the need for isolation trenches, such as trench **120,** for example, to avoid charge buildup under a bus bar, but also to simplify fabrication of the device by reducing or even eliminating laser isolation scribe steps.

After formation of the EC device, edge deletion processes and additional laser scribing are performed. **Figures 1A** and **1B** depict areas **140** where the EC device has been removed, in this example, from a perimeter region surrounding laser scribe trenches, **150, 155, 160** and **165.** Laser scribes **150, 160** and **165** are sometimes referred to as "L2" scribes, because they are the second scribes in certain processes. Laser scribe **155** is sometimes referred to as the "L3" scribe, because it is the third scribe in certain processes. The L3 scribe passes through second TCO, **130,** and in this example (but not necessarily) the EC stack **125,** but not the first TCO **115.** Laser scribe trenches **150, 155, 160,** and **165** are made to isolate portions of the EC device, **135, 145, 170,** and **175,** which were potentially damaged during edge deletion processes from the operable EC device. In one embodiment, laser scribe trenches **150, 160,** and **165** pass through the first TCO to aid in isolation of the device (laser scribe trench **155** does not pass through the first TCO, otherwise it would cut off bus bar 2's electrical communication with the first TCO and thus the EC stack). In some embodiments, such as those depicted in **Figures 1A-1D****,** laser scribe trenches **150, 160,** and **165** may also pass through a diffusion barrier.

The laser or lasers used for the laser scribe processes are typically, but not necessarily, pulse-type lasers, for example, diode-pumped solid state lasers. For example, the laser scribe processes can be performed using a suitable laser. Some examples of suppliers that may provide suitable lasers include IPG Photonics Corp. (of Oxford, Massachusetts), Ekspla (of Vilnius, Lithuania), TRUMPF Inc. (Farmington, Connecticut), SPI Lasers LLC (Santa Clara, California), Spectra-Physics Corp. (Santa Clara, California), nLIGHT Inc. (Vancouver, Washington), and Fianium Inc. (Eugene, Oregon). Certain scribing steps can also be performed mechanically, for example, by a diamond tipped scribe; however, certain embodiments describe depth control during scribes or other material removal processing, which is well controlled with lasers. For example, in one embodiment, edge deletion is performed to the depth of the first TCO, in another embodiment edge deletion is performed to the depth of a diffusion barrier (the first TCO is removed), in yet another embodiment edge deletion is performed to the depth of the substrate (all material layers removed down to the substrate). In certain embodiments, variable depth scribes are described.

After laser scribing is complete, bus bars are attached. Non-penetrating bus bar (1) is applied to the second TCO. Non-penetrating bus bar (2) is applied to an area where the device including an EC stack and a second TCO was not deposited (for example, from a mask protecting the first TCO from device deposition) or, in this example, where an edge deletion process (e.g. laser ablation using an apparatus e.g. having a XY or XYZ galvanometer) was used to remove material down to the first TCO. In this example, both bus bar 1 and bus bar 2 are non-penetrating bus bars. A penetrating bus bar is one that is typically pressed into (or soldered) and through one or more layers to make contact with a lower conductor, e.g. TCO located at the bottom of or below one or more layers of the EC stack). A non-penetrating bus bar is one that does not penetrate into the layers, but rather makes electrical and physical contact on the surface of a conductive layer, for example, a TCO. A typical example of a non-penetrating bus bar is a conductive ink, e.g. a silver-based ink, applied to the appropriate conductive surface.

The TCO layers can be electrically connected using a non-traditional bus bar, for example, a bus bar fabricated with screen and lithography patterning methods. In one embodiment, electrical communication is established with the device's transparent conducting layers via silk screening (or using another patterning method) a conductive ink followed by heat curing or sintering the ink. Advantages to using the above described device configuration include simpler manufacturing, for example, and less laser scribing than conventional techniques which use penetrating bus bars.

After the bus bars are fabricated or otherwise applied to one or more conductive layers, the electrochromic lite may be integrated into an insulated glass unit (IGU), which includes, for example, wiring for the bus bars and the like. In some embodiments, one or both of the bus bars are inside the finished IGU. In particular embodiments, both bus bars are configured between the spacer and the glass of the IGU (commonly referred to as the primary seal of the IGU); that is, the bus bars are registered with the spacer used to separate the lites of an IGU. Area **140** is used, at least in part, to make the seal with one face of the spacer used to form the IGU. Thus, the wires or other connection to the bus bars runs between the spacer and the glass. As many spacers are made of metal, e.g., stainless steel, which is conductive, it is desirable to take steps to avoid short circuiting due to electrical communication between the bus bar and connector thereto and the metal spacer. Particular methods and apparatus for achieving this end are described in U.S. Patent Application, serial number 13/312,057, filed December 6, 2011, and titled "Improved Spacers for Insulated Glass Units,". In certain embodiments described herein, methods and resulting IGUs include having the perimeter edge of the EC device, bus bars and any isolation scribes are all within the primary seal of the IGU.

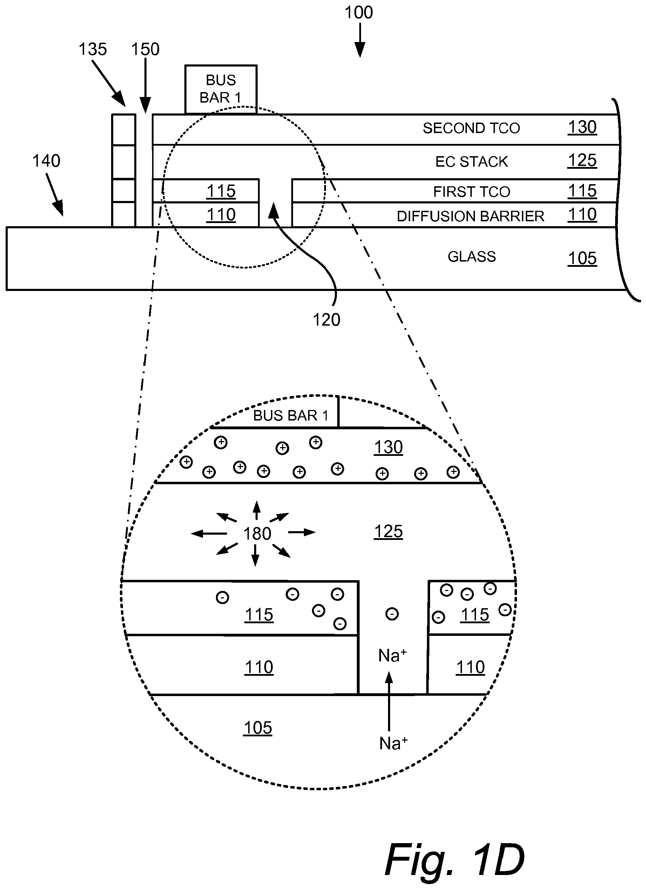

**Figure 1D** depicts a portion of the cross section in **Figure 1A****,** where a portion of the depiction is expanded to illustrate an issue for which certain embodiments disclosed herein may overcome. Prior to fabrication of EC stack **125** on TCO **115,** an isolation trench, **120,** is formed through TCO **115** and diffusion barrier **110** in order to isolate a portion of the **115/110** stack from a larger region. This isolation trench is intended to cut off electrical communication of the lower TCO **115,** which is ultimately in electrical communication with bus bar 2, with a section of TCO **115** that lies directly below bus bar 1, which lies on TCO **130** and supplies electrical energy thereto. For example, during coloration of the EC device, bus bar 1 and bus bar 2 are energized in order to apply a potential across the EC device; for example, TCO **115** has a negative charge and TCO **130** has a positive charge or visa versa.

Isolation trench **120** is desirable for a number of reasons. It is sometimes desirable not to have the EC device color under bus bar 1 since this area is not viewable to the end user (the window frame typically extends beyond the bus bars and the isolation trench and/or these features are under the spacer as described above). Also, sometimes area **140** includes the lower TCO and the diffusion barrier, and in these instances it is undesirable for the lower TCO to carry charge to the edge of the glass, as there may be shorting issues and unwanted charge loss in areas that are not seen by the end user. Also, because the portion of the EC device directly under the bus bar experiences the most charge flux, there is a predisposition for this region of the device to form defects, e.g., delamination, particle dislodging (pop-off defects), and the like, which can cause abnormal or no coloring regions that become visible in the viewable region and/or negatively affect device performance. Isolation trench **120** was designed to address these issues. Despite these desired outcomes, it has been found that coloration below the first bus bar still occurs. This phenomenon is explained in relation to the expanded section of device **100** in the lower portion of **Figure 1D****.**

When EC stack **125** is deposited on first TCO **115,** the electrochromic materials, of which EC stack **125** is comprised, fill isolation trench **120.** Though the electrical path of first TCO **115** is cut off by trench **120,** the trench becomes filled with material that, although not as electrically conductive as the TCO, is able to carry charge and is permeable to ions. During operation of EC lite **100,** e.g. when first TCO **115** has a negative charge (as depicted in **Figure 1D**), small amounts of charge pass across trench **120** and enter the isolated portion of first TCO **115.** This charge buildup may occur over several cycles of coloring and bleaching EC lite **100.** Once the isolated area of TCO **115** has charge built up, it allows coloration of the EC stack **125** under bus bar 1, in area **180.** Also, the charge in this portion of first TCO **115,** once built up, does not drain as efficiently as charge normally would in the remaining portion of TCO **115,** e.g., when an opposite charge is applied to bus bar 2. Another problem with isolation trench **120** is that the diffusion barrier may be compromised at the base of the trench. This can allow sodium ions to diffuse into the EC stack **125** from the glass substrate. These sodium ions can act as charge carriers and enhance charge buildup on the isolated portion of first TCO **115.** Yet another issue is that charge buildup under the bus bar can impose excess stress on the material layers and promote defect formation in this area. Finally, fabricating an isolation scribe in the conductor layer on the substrate adds further complication to the processing steps. Embodiments described herein may overcome these problems and others.

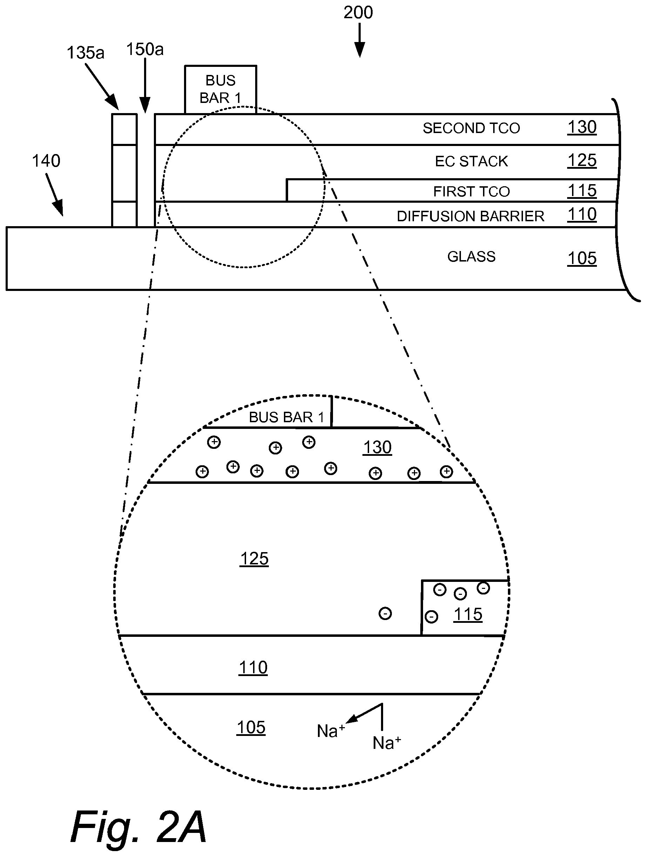

**Figure 2A** is a partial cross-section showing an improved architecture of an EC device, **200.** In this illustrated embodiment, the portion of first TCO **115** that would have extended below bus bar 1 is removed prior to fabrication of EC stack **125.** In this embodiment, diffusion barrier **110** extends to under bus bar 1 and to the edge of the EC device. In some embodiments, the diffusion barrier extends to the edge of glass **105,** that is, it covers area **140.** In other embodiments, a portion of the diffusion barrier may also be removed under the bus bar 1. In the aforementioned embodiments, the selective TCO removal under bus bar 1 is performed prior to fabrication of EC stack **125.** Edge deletion processes to form areas **140** (e.g., around the perimeter of the glass where the spacer forms a seal with the glass) can be performed prior to device fabrication or after. In certain embodiments, an isolation scribe trench, **150a,** is formed if the edge delete process to form **140** creates a rough edge or otherwise unacceptable edge due to, e.g., shorting issues, thus isolating a portion, **135a,** of material from the remainder of the EC device. As exemplified in the expanded portion of EC device **200** depicted in **Figure 2A****,** since there is no portion of TCO **115** under bus bar 1, the aforementioned problems such as unwanted coloring and charge buildup may be avoided. Also, since diffusion barrier **110** is left intact, at least co-extensive with EC stack **125,** sodium ions are prevented from diffusing into the EC stack **125** and causing unwanted conduction or other problems.

In certain embodiments, a band of TCO **115** is selectively removed in the region under where bus bar 1 will reside once fabrication is complete. That is, the diffusion barrier **110** and first TCO **115** may remain on the area **140,** but a width of the first TCO **115** is selectively removed under bus bar 1. In one embodiment, the width of the removed band of TCO **115** may greater than the width of the bus bar 1 which resides above the removed band of TCO once device fabrication is complete. Embodiments described herein include an EC device having the configuration as depicted and described in relation to **Figure 2A** with a selectively removed band of TCO **115.** In one embodiment, the remainder of the device is as depicted and described as in relation to **Figures 1A-C.**

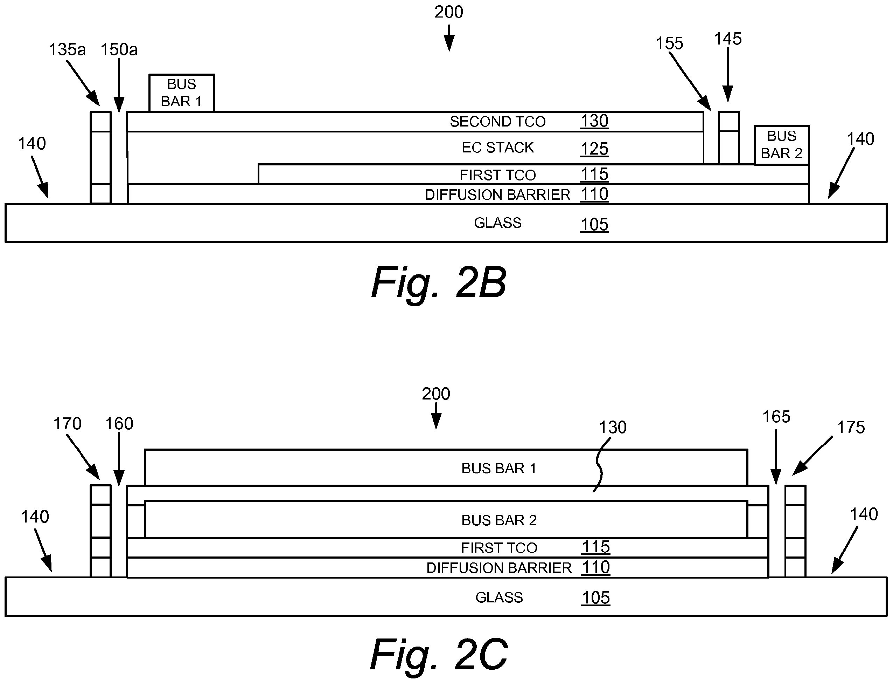

A device similar to device **200** is depicted in **Figures 2B** and **2C****,** showing the device architecture including laser isolation trenches and the like. **Figures 2B** and **2C** are drawings of an improved device architecture of disclosed embodiments. In certain embodiments, there are fewer, or no, laser isolation trenches made during fabrication of the device. These embodiments are described in more detail below.

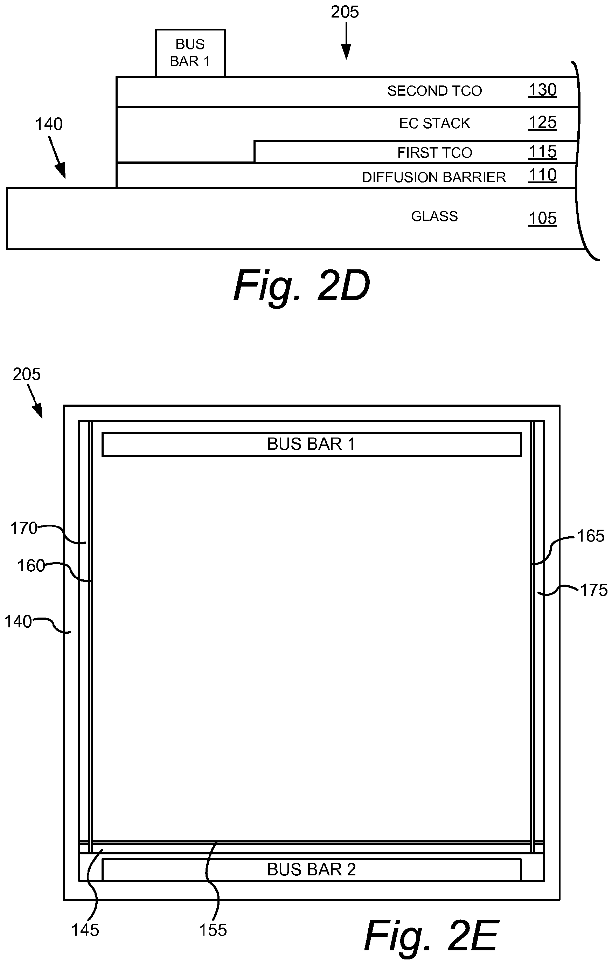

**Figures 2D** and **2E** depict an electrochromic device, **205,** which has architecture very similar to device **200,** but it has neither a laser isolation scribe **150a,** nor an isolated region, **135a,** of the device that is non-functional. Certain laser edge delete processes leave a sufficiently clean edge of the device such that laser scribes like **150a** are not necessary. One embodiment is an optical device as depicted in **Figures 2D** and **2E** but not having isolation scribes **160** and **165,** nor isolated portions **170** and **175.** One embodiment is an optical device as depicted in **Figures 2D** and **2E** but not having isolation scribe **155,** nor isolated portion **145.** One embodiment is an optical device as depicted in **Figures 2D** and **2E** but not having isolation scribes **160, 165,** or **155,** nor isolated portions **145, 170,** and **175.** In certain embodiments, fabrication methods do not include any laser isolation scribes and thus produce optical devices having no physically isolated non-functional portions of the device.

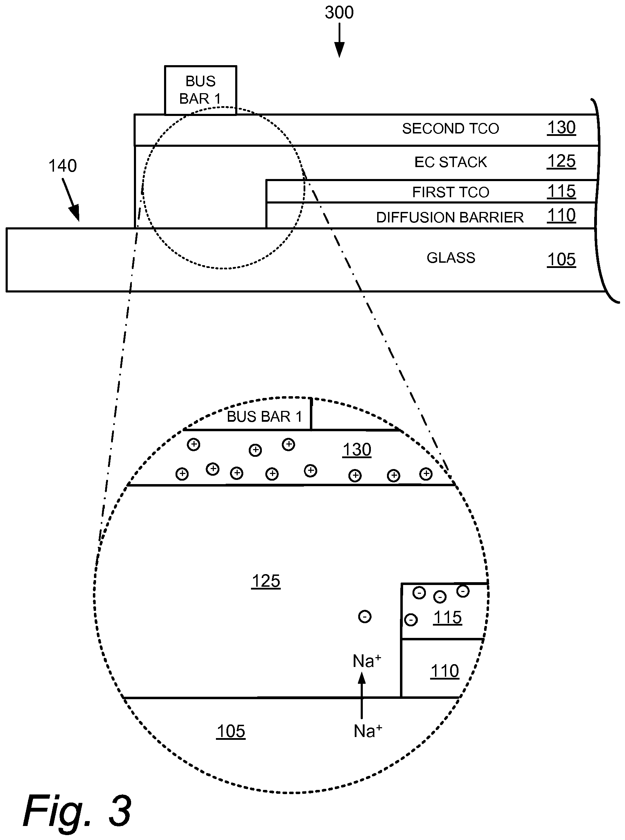

As described in more detail below, certain embodiments include devices where the one or more material layers of the device and the second (upper) conductor layer are not co-extensive with the first (lower) conductor layer; specifically, these portions overhang the first conductor layer about some portion of the perimeter of the area of the first conductor. These overhanging portions may or may not include a bus bar. As an example, the overhanging portions as described in relation to **Figure 2A** or **3** do have a bus bar on the second conductor layer.

**Figure 3** is a partial cross-section showing an improved electrochromic device architecture, **300** of disclosed embodiments. In this illustrated embodiment, the portions of TCO **115** and diffusion barrier **110** that would have extended below bus bar 1 are removed prior to fabrication of EC stack **125.** That is, the first TCO and diffusion barrier removal under bus bar 1 is performed prior to fabrication of EC stack **125.** Edge deletion processes to form areas **140** (e.g., around the perimeter of the glass where the spacer forms a seal with the glass) can be performed prior to device fabrication (e.g., removing the diffusion barrier and using a mask thereafter) or after device fabrication (removing all materials down to the glass). In certain embodiments, an isolation scribe trench, analogous to **150a** in **Figure 2A****,** is formed if the edge deletion process to form **140** creates a rough edge, thus isolating a portion, **135a** (see **Figure 2A**), of material from the remainder of the EC device.

Referring again to **Figure 3****,** as exemplified in the expanded portion of device **300,** since there is no portion of TCO **115** under bus bar 1, therefore the aforementioned problems such as unwanted coloring and charge buildup may be avoided. In this example, since diffusion barrier **110** is also removed, sodium ions may diffuse into the EC stack in the region under bus bar 1; however, since there is no corresponding portion of TCO **115** to gain and hold charge, coloring and other issues are less problematic. In certain embodiments, a band of TCO **115** and diffusion barrier **110** is selectively removed in the region under where bus bar 1 will reside; that is, on the area **140,** the diffusion barrier and TCO may remain, but a width of TCO **115** and diffusion barrier **110** is selectively removed under and at least co-extensive with bus bar 1. In one embodiment, the width of the removed band of TCO and diffusion barrier is greater than the width of the bus bar which resides above the removed band once device fabrication is complete. Embodiments described herein include an EC device having the configuration as depicted and described in relation to **Figure 3****.** In one embodiment, the remainder of the device is as depicted and described as in relation **to** **Figures 1A-C.** In certain embodiments, there are fewer, or no, laser isolation trenches made during fabrication of the device.

Embodiments include an optical device as described in relation to **Figure 3****,** where the remainder is as device **205** as described in relation to **Figures 2D** and **2E****.** One embodiment is an optical device as depicted in **Figure 3****,** but not having isolation scribes **160** and **165,** nor isolated portions **170** and **175,** as depicted **Figures 2D** and **2E****.** One embodiment is an optical device as depicted in **Figure 3****,** but not having isolation scribe **155,** nor isolated portion **145,** as depicted in **Figures 2D** and **2E****.** One embodiment is an optical device as depicted in **Figure 3****,** but not having isolation scribes **160, 165,** or **155,** nor isolated portions **145, 170,** and **175,** as depicted in **Figures 2D** and **2E****.** Any of the aforementioned embodiments may also include an isolation scribe analogous to scribe **150** as depicted in relation to **Figures 1A-D,** but not an isolation scribe analogous to scribe **120.** All embodiments described herein obviate the need for a laser isolation scribe analogous to scribe **120,** as described in relation to **Figures 1A-D.** In addition, the goal is to reduce the number of laser isolation scribes needed, but depending upon the device materials or lasers used for example, the scribes other than scribe **120** may or may not be necessary.

As described above, in certain embodiments, devices are fabricated without the use of laser isolation scribes, that is, the final device has no isolated portions that are non-functional. Exemplary fabrication methods are described below in terms of having no isolation scribes; however, it is to be understood that one embodiment is any device as described below, where the device has the functional equivalent (depending on its geometry) of the isolation scribes as described in relation to **Figures 1A-D,** but not isolation scribe **120.** More specifically, one embodiment is an optical device as described below, but not having isolation scribes **160** and **165** as depicted **Figures 2D** and **2E****.** One embodiment is an optical device as described below, but not having isolation scribe **155** as depicted in **Figures 2D** and **2E****.** One embodiment is an optical device as described below, but not having isolation scribes **160, 165,** or **155** as depicted in **Figures 2D** and **2E****.** Any of the aforementioned embodiments may also include an isolation scribe analogous to scribe **150** as depicted in relation to **Figures 1A-D.**

One embodiment is a method of fabricating an optical device including one or more material layers sandwiched between a first conducting layer (e.g., first TCO **115**) and a second conducting layer (e.g., second TCO **130**). The method includes: (i) receiving a substrate including the first conducting layer over its work surface; (ii) removing a first width of the first conducting layer from between about 10% and about 90% of the perimeter of the substrate; (iii) depositing the one or more material layers of the optical device and the second conducting layer such that they cover the first conducting layer and, where possible, extend beyond the first conducting layer about its perimeter; (iv) removing a second width, narrower than the first width, of all the layers about substantially the entire perimeter of the substrate, where the depth of removal is at least sufficient to remove the first conducting layer; (v) removing at least one portion of the second transparent conducting layer and the one or more layers of the optical device thereunder thereby revealing at least one exposed portion of the first conducting layer; and (vi) applying a bus bar to the at least one exposed portion of the first transparent conducting layer; where at least one of the first and second conducting layers is transparent. In one embodiment, (ii) includes removing the first width of the first conducting layer from between about 50% and about 75% around the perimeter of the substrate.

In one embodiment, a portion of the edge of the first conducting layer remaining after (ii) is tapered as described in more detail below. The tapered portion of the edge may include one, two or more sides if the transparent conductor is of a polygonal shape after (ii). In some cases, the first conducting layer is polished before (ii), and then optionally edge tapered. In other cases, the first conducting layer is polished after (ii), with or without edge tapering. In the latter cases, tapering can be prior to polish or after polishing.

In one embodiment, the at least one exposed portion of the first conducting layer exposed is fabricated along the perimeter portion of the optical device proximate the side or sides of the substrate where the first conducting layer was not removed in (ii). In certain embodiments, the exposed portion of the first conducting layer is not an aperture, or hole, through the one or more material layers and second conducting layer, but rather the exposed portion is an area that sticks out from an edge portion of the functional device stack layers. This is explained in more detail below with reference to particular examples.

The method may further include applying at least one second bus bar to the second conducting layer, particularly on a portion that does not cover the first conducting layer. In one embodiment, the optical device is an electrochromic device and may be all solid-state and inorganic. The substrate may be float glass and the first conducting layer may include tin oxide, e.g. fluorinated tin oxide. In one embodiment, (iii) is performed in an all vacuum integrated deposition apparatus. In certain embodiments, the method further includes depositing a vapor barrier layer on the second conducting layer prior to (iv).

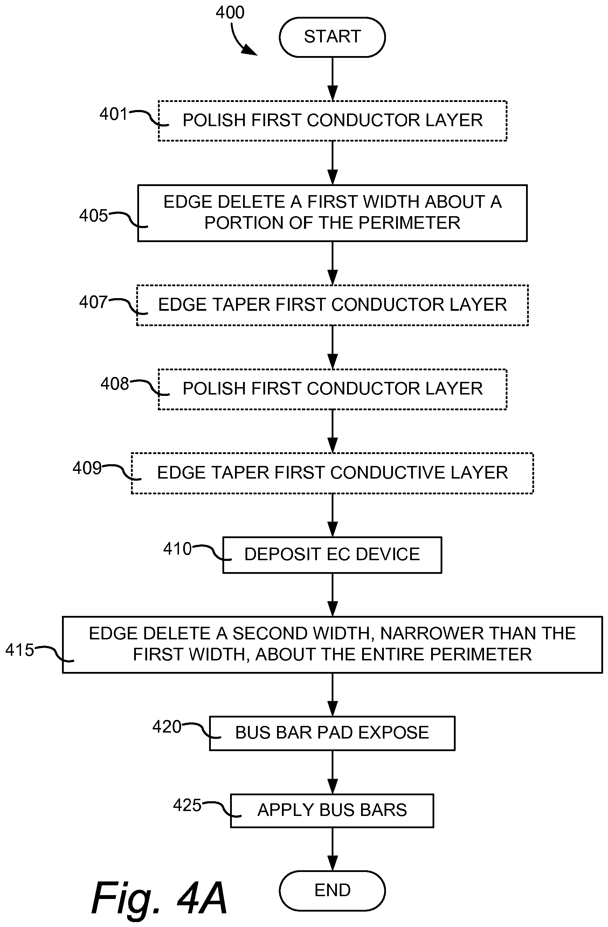

In one embodiment, the at least one exposed portion of the first conducting layer is fabricated along the length of one side of the optical device, in one embodiment along the length of the side of the optical device proximate the side of the substrate where the first conducting layer was not removed in (ii). In one embodiment, the at least one second bus bar is applied to the second conducting layer proximate the side of the optical device opposite the at least one exposed portion of the first conducting layer. If a vapor barrier is applied a portion is removed in order to expose the second conductor layer for application of the at least one second bus bar. These methods are described below in relation to specific embodiments with relation to **Figures 4A-D.**

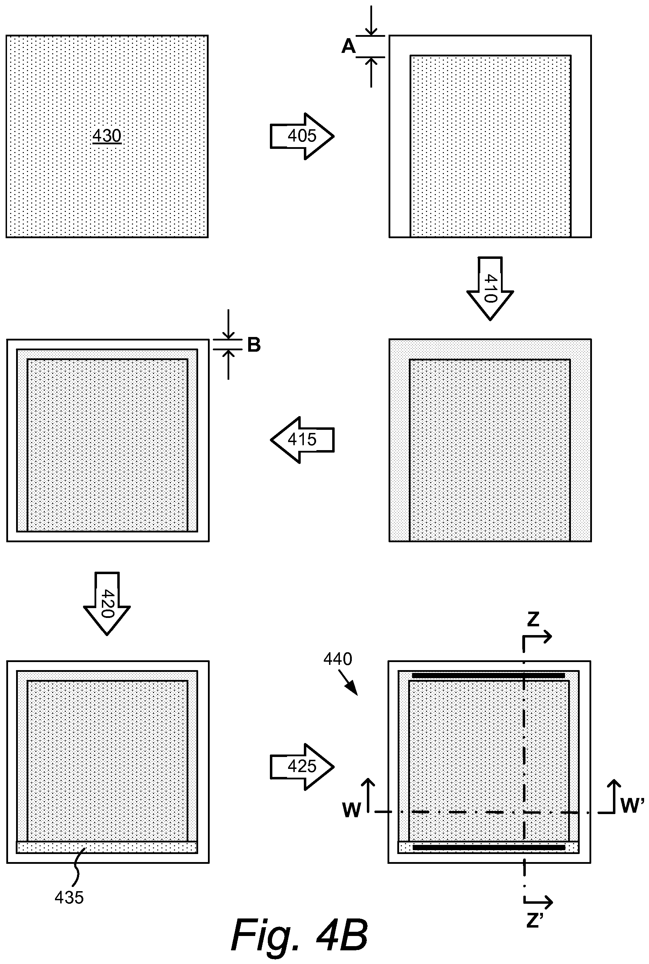

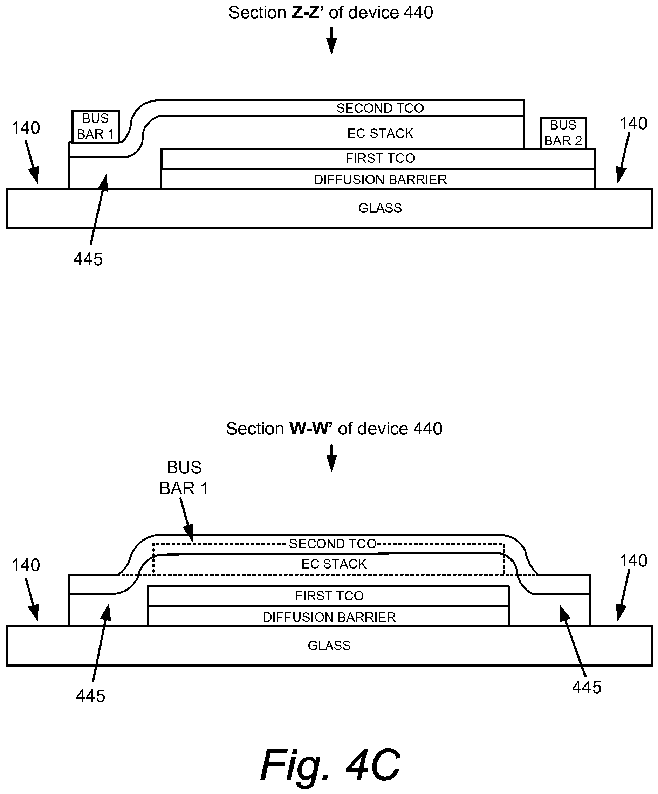

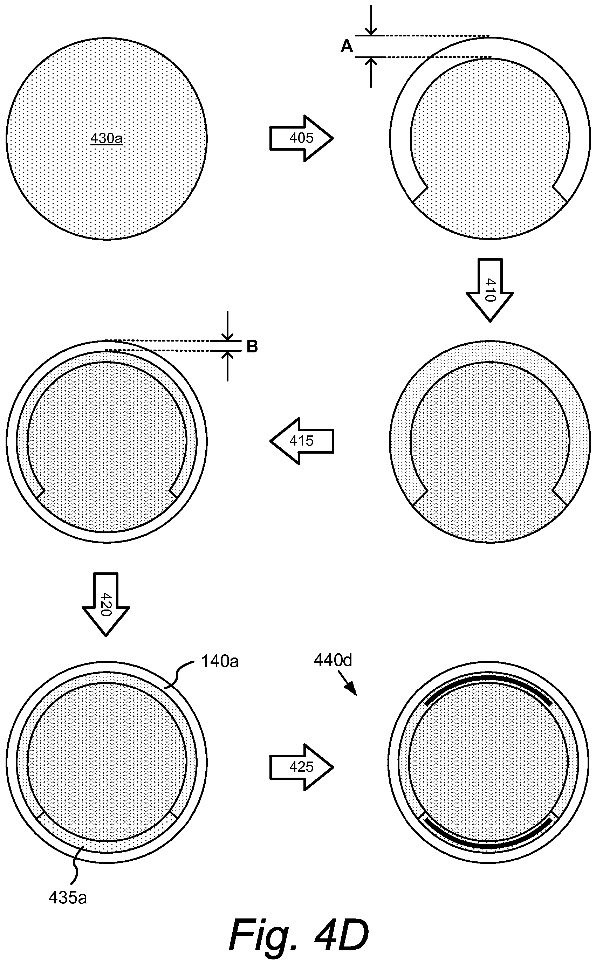

**Figure 4A** is a process flow, **400,** describing aspects of a method of fabricating an electrochromic device or other optical device having opposing bus bars, each applied to one of the conductor layers of the optical device. The dotted lines denote optional steps in the process flow. An exemplary device, **440,** as described in relation to **Figures 4B-C,** is used to illustrate the process flow. **Figure 4B** provides top views depicting the fabrication of device **440** including numerical indicators of process flow **400** as described in relation to **Figure 4A****.** **Figure 4C** shows cross-sections of the lite including device **440** described in relation to **Figure 4B****.** Device **440** is a rectangular device, but process flow **400** applies to any shape of optical device having opposing bus bars, each on one of the conductor layers. This aspect is described in more detail below, e.g. in relation to **Figure 4D** (which illustrates process flow **400** as it relates to fabrication of a round electrochromic device).

Referring **to** **Figures 4A** and **4B****,** after receiving a substrate with a first conductor layer thereon, process flow **400** begins with an optional polishing of the first conductor layer, see **401.** In certain embodiments, polishing a lower transparent conductor layer has been found to enhance the optical properties of, and performance of, EC devices fabricated thereon. Polishing of transparent conducting layers prior to electrochromic device fabrication thereon is described in patent application, PCT/US12/57606, titled, "Optical Device Fabrication," filed on September 27, 2012, which is hereby incorporated by reference in its entirety. Polishing, if performed, may be done prior to an edge deletion, see **405,** or after an edge deletion in the process flow. In certain embodiments, the lower conductor layer may be polished both before and after edge deletion. Typically, the lower conductor layer is polished only once.

Referring again to **Figure 4A****,** if polishing **401** is not performed, process **400** begins with edge deleting a first width about a portion of the perimeter of the substrate, see **405.** The edge deletion may remove only the first conductor layer or may also remove a diffusion barrier, if present. In one embodiment, the substrate is glass and includes a sodium diffusion barrier and a transparent conducting layer thereon, e.g. a tin-oxide based transparent metal oxide conducting layer. The substrate may be rectangular (e.g., the square substrate depicted in see **Figure 4B**). The dotted area in **Figure 4B** denotes the first conductor layer. Thus, after edge deletion according to process **405,** a width **A** is removed from three sides of the perimeter of substrate **430.** This width is typically, but not necessarily, a uniform width. A second width, **B,** is described below. Where width **A** and/or width **B** are not uniform, then their relative magnitudes with respect to each other are in terms of their average width.

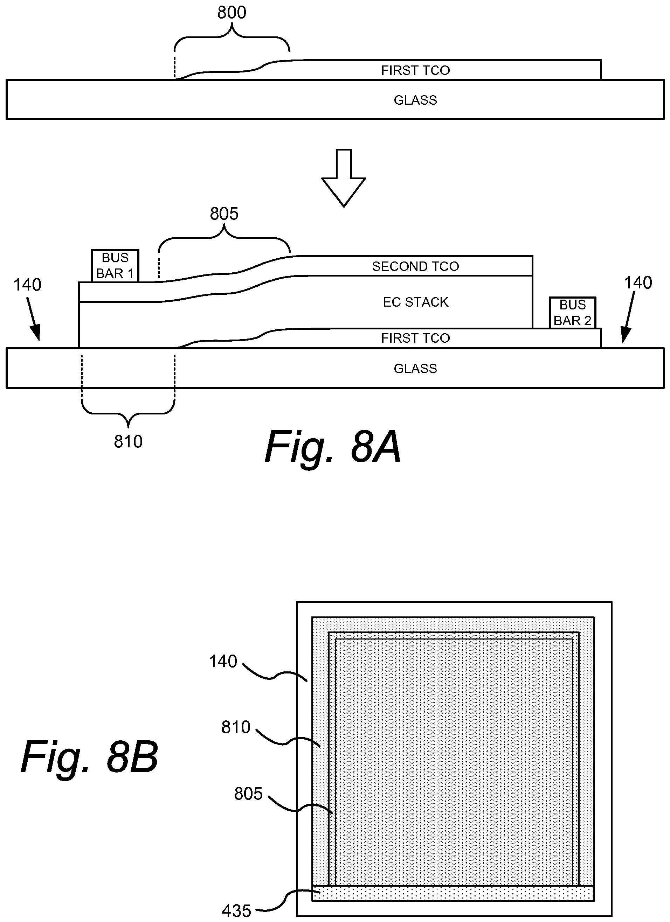

As a result of the removal of the first width **A** at **405,** there is a newly exposed edge of the lower conductor layer. In certain embodiments, at least a portion of this edge of the first conductive layer may be optionally tapered, see **407** and **409.** The underlying diffusion barrier layer may also be tapered. The inventors have found that tapering the edge of one or more device layers, prior to fabricating subsequent layers thereon, has unexpected advantages in device structure and performance. The edge tapering process is described in more detail in relation to **Figures 8A** and **8B****.**

In certain embodiments, the lower conductor layer is optionally polished after edge tapering, see **408.** It has been found, that with certain device materials, it may be advantageous to polish the lower conductor layer after the edge taper, as polishing can have unexpected beneficial effects on the edge taper as well as the bulk conductor surface which may improve device performance (as described above). In certain embodiments, the edge taper is performed after polish **408,** see **409.** Although edge tapering is shown at both **407** and **409** in **Figure 4A****,** if performed, edge tapering would typically be performed once (e.g., at **407** or **409**).

After removal of the first width **A,** and optional polishing and/or optional edge tapering as described above, the EC device is deposited over the surface of substrate **430,** see **410.** This deposition includes one or more material layers of the optical device and the second conducting layer, e.g. a transparent conducting layer such as indium tin oxide (ITO). The depicted coverage is the entire substrate, but there could be some masking due to a carrier that must hold the glass in place. In one embodiment, the entire area of the remaining portion of the first conductor layer is covered including overlapping the first conductor about the first width **A** previously removed. This allows for overlapping regions in the final device architecture as explained in more detail below.

In particular embodiments, electromagnetic radiation is used to perform edge deletion and provide a peripheral region of the substrate, e.g. to remove transparent conductor layer or more layers (up to and including the top conductor layer and any vapor barrier applied thereto), depending upon the process step. In one embodiment, the edge deletion is performed at least to remove material including the transparent conductor layer on the substrate, and optionally also removing a diffusion barrier if present. In certain embodiments, edge deletion is used to remove a surface portion of the substrate, e.g. float glass, and may go to a depth not to exceed the thickness of the compression zone. Edge deletion is performed, e.g., to create a good surface for sealing by at least a portion of the primary seal and the secondary seal of the IGU. For example, a transparent conductor layer can sometimes lose adhesion when the conductor layer spans the entire area of the substrate and thus has an exposed edge, despite the presence of a secondary seal. Also, it is believed that when metal oxide and other functional layers have such exposed edges, they can serve as a pathway for moisture to enter the bulk device and thus compromise the primary and secondary seals.

Edge deletion is described herein as being performed on a substrate that is already cut to size. However, edge deletion can be done before a substrate is cut from a bulk glass sheet in other disclosed embodiments. For example, non-tempered float glass may be cut into individual lites after an EC device is patterned thereon. Methods described herein can be performed on a bulk sheet and then the sheet cut into individual EC lites. In certain embodiments, edge deletion may be carried out in some edge areas prior to cutting the EC lites, and again after they are cut from the bulk sheet. In certain embodiments, all edge deletion is performed prior to excising the lites from the bulk sheet. In embodiments employing "edge deletion" prior to cutting the panes, portions of the coating on the glass sheet can be removed in anticipation of where the cuts (and thus edges) of the newly formed EC lites will be. In other words, there is no actual substrate edge yet, only a defined area where a cut will be made to produce an edge. Thus "edge deletion" is meant to include removing one or more material layers in areas where a substrate edge is anticipated to exist. Methods of fabricating EC lites by cutting from a bulk sheet after fabrication of the EC device thereon are described in U.S. Patent Application, serial number 12/941,882 (now U.S. Patent No. 8,164,818), filed November 8, 2010, and U.S. Patent Application, serial number 13/456,056, filed April 25, 2012, each titled "Electrochromic Window Fabrication Methods". One of ordinary skill in the art would appreciate that if one were to carry out methods described herein on a bulk glass sheet and then cut individual lites therefrom, in certain embodiments masks may have to be used, whereas when performed on a lite of desired end size, masks are optional.

Exemplary electromagnetic radiation includes UV, lasers, and the like. For example, material may be removed with directed and focused energy one of the wavelengths 248 nm, 355 nm (UV), 1030 nm (IR, e.g. disk laser), 1064 nm (e.g. Nd:YAG laser), and 532 nm (e.g. green laser). Laser irradiation is delivered to the substrate using, e.g. optical fiber or open beam path. The ablation can be performed from either the substrate side or the EC film side depending on the choice of the substrate handling equipment and configuration parameters. The energy density required to ablate the film thickness is achieved by passing the laser beam through an optical lens. The lens focuses the laser beam to the desired shape and size. In one embodiment, a "top hat" beam configuration is used, e.g., having a focus area of between about 0.005 mm² to about 2 mm². In one embodiment, the focusing level of the beam is used to achieve the required energy density to ablate the EC film stack. In one embodiment, the energy density used in the ablation is between about 2 J/cm² and about 6 J/cm².

During a laser edge delete process, a laser spot is scanned over the surface of the EC device, along the periphery. In one embodiment, the laser spot is scanned using a scanning F theta lens. Homogeneous removal of the EC film is achieved, e.g., by overlapping the spots' area during scanning. In one embodiment, the overlap is between about 5% and about 100%, in another embodiment between about 10% and about 90%, in yet another embodiment between about 10% and about 80%. Various scanning patterns may be used, e.g., scanning in straight lines, curved lines, and various patterns may be scanned, e.g., rectangular or other shaped sections are scanned which, collectively, create the peripheral edge deletion area. In one embodiment the scanning lines (or "pens," i.e. lines created by adjacent or overlapping laser spots, e.g. square, round, etc.) are overlapped at the levels described above for spot overlap. That is, the area of the ablated material defined by the path of the line previously scanned is overlapped with later scan lines so that there is overlap. That is, a pattern area ablated by overlapping or adjacent laser spots is overlapped with the area of a subsequent ablation pattern. For embodiments where overlapping is used, spots, lines or patterns, a higher frequency laser, e.g. in the range of between about 11 KHz and about 500 KHz, may be used. In order to minimize heat related damage to the EC device at the exposed edge (a heat affected zone or "HAZ"), shorter pulse duration lasers are used. In one example, the pulse duration is between about 100 fs (femtosecond) and about 100 ns (nanosecond), in another embodiment the pulse duration is between about 1 ps (picosecond) and about 50 ns, in yet another embodiment the pulse duration is between about 20 ps and about 30 ns. Pulse duration of other ranges can be used in other embodiments.

Referring again to **Figures 4A** and **4B****,** process flow **400** continues with removing a second width, **B,** narrower than the first width **A,** about substantially the entire perimeter of the substrate, see **415.** This may include removing material down to the glass or to a diffusion barrier, if present. After process flow **400** is complete up to **415,** e.g. on a rectangular substrate as depicted in **Figure 4B****,** there is a perimeter area, with at least width **B,** where there is none of the first transparent conductor, the one or more material layers of the device, or the second conducting layer -removing width **B** has exposed diffusion barrier or substrate. Within this perimeter area is the device stack, including the first transparent conductor surrounded on three sides by overlapping one or more material layers and the second conductor layer. On the remaining side (e.g., the bottom side in **Figure 4B**) there is no overlapping portion of the one or more material layers and the second conductor layer. It is proximate this remaining side (e.g., bottom side in **Figure 4B**) that the one or more material layers and the second conductor layer are removed in order to expose a portion (bus bar pad expose, or "BPE"), **435,** of the first conductor layer, see **420.** The BPE **435** need not run the entire length of that side, it need only be long enough to accommodate the bus bar and leave some space between the bus bar and the second conductor layer so as not to short on the second conductor layer. In one embodiment, the BPE **435** spans the length of the first conductor layer on that side.

As described above, in various embodiments, a BPE is where a portion of the material layers are removed down to the lower electrode or other conductive layer (e.g. a transparent conducting oxide layer), in order to create a surface for a bus bar to be applied and thus make electrical contact with the electrode. The bus bar applied can be a soldered bus bar, and ink bus bar and the like. A BPE typically has a rectangular area, but this is not necessary; the BPE may be any geometrical shape or an irregular shape. For example, depending upon the need, a BPE may be circular, triangular, oval, trapezoidal, and other polygonal shapes. The shape may be dependent on the configuration of the EC device, the substrate bearing the EC device (e.g. an irregular shaped window), or even, e.g., a more efficient (e.g. in material removal, time, etc.) laser ablation pattern used to create it. In one embodiment, the BPE spans at least about 50% of the length of one side of an EC device. In one embodiment, the BPE spans at least about 80% of the length of one side of an EC device. Typically, but not necessarily, the BPE is wide enough to accommodate the bus bar, but should allow for some space at least between the active EC device stack and the bus bar. In one embodiment, the BPE is substantially rectangular, the length approximating one side of the EC device and the width is between about 5 mm and about 15 mm, in another embodiment between about 5 mm and about 10 mm, and in yet another embodiment between about 7 mm and about 9 mm. As mentioned, a bus bar may be between about 1 mm and about 5 mm wide, typically about 3 mm wide.

As mentioned, the BPE is fabricated wide enough to accommodate the bus bar's width and also leave space between the bus bar and the EC device (as the bus bar is only supposed to touch the lower conductive layer). The bus bar width may exceed that of the BPE (and thus there is bus bar material touching both the lower conductor and glass (and/or diffusion barrier) on area **140**), as long as there is space between the bus bar and the EC device (in embodiments where there is an L3 isolation scribe, the bus bar may contact the deactivated portion, e.g. see **145** in **Figure 1A**). In embodiments where the bus bar width is fully accommodated by the BPE, that is, the bus bar is entirely atop the lower conductor, the outer edge, along the length, of the bus bar may be aligned with the outer edge of the BPE, or inset by about 1 mm to about 3 mm. Likewise, the space between the bus bar and the EC device is between about 1 mm and about 3 mm, in another embodiment between about 1 mm and 2 mm, and in another embodiment about 1.5 mm. Formation of BPEs is described in more detail below, with respect to an EC device having a lower electrode that is a TCO. This is for convenience only, the electrode could be any suitable electrode for an optical device, transparent or not.

To make a BPE, an area of the bottom TCO (e.g. first TCO) is cleared of deposited material so that a bus bar can be fabricated on the TCO. In one embodiment, this is achieved by laser processing which selectively removes the deposited film layers while leaving the bottom TCO exposed in a defined area at a defined location. In one embodiment, the absorption characteristics of the bottom electrode and the deposited layers are exploited in order to achieve selectivity during laser ablation, that is, so that the EC materials on the TCO are selectively removed while leaving the TCO material intact. In certain embodiments, an upper portion (depth) of the TCO layer is also removed in order to ensure good electrical contact of the bus bar, e.g., by removing any mixture of TCO and EC materials that might have occurred during deposition. In certain embodiments, when the BPE edges are laser machined so as to minimize damage at these edges, the need for an L3 isolation scribe line to limit leakage currents can be avoided - this eliminates a process step, while achieving the desired device performance results.

In certain embodiments, the electromagnetic radiation used to fabricate a BPE is the same as described above for performing edge deletion. The (laser) radiation is delivered to the substrate using either optical fiber or the open beam path. The ablation can be performed from either glass side or the film side depending on the choice of the electromagnetic radiation wavelength. The energy density required to ablate the film thickness is achieved by passing the laser beam through an optical lens. The lens focuses the laser beam to the desired shape and size, e.g. a "top hat" having the dimensions described above, in one embodiment, having an energy density of between about 0.5 J/cm² and about 4 J/cm². In one embodiment, laser scan overlapping for BPE is done as described above for laser edge deletion. In certain embodiments, variable depth ablation is used for BPE fabrication. This is described in more detail below.

In certain embodiments, e.g. due to the selective nature of the absorption in an EC film, the laser processing at the focal plane results in some amount (between about 10 nm and about 100 nm) of residue, e.g. tungsten oxide, remaining on the exposed area of the lower conductor. Since many EC materials are not as conductive as the underlying conductor layer, the bus bar fabricated on this residue does not make full contact with the underlying conductor, resulting in voltage drop across the bus bar to lower conductor interface. The voltage drop impacts coloration of the device as well as impacts the adhesion of the bus bar to the lower conductor. One way to overcome this problem is to increase the amount of energy used for film removal, however, this approach results in forming a trench at the spot overlap, unacceptably depleting the lower conductor. To overcome this problem the laser ablation *above the focal plane* is performed, i.e. the laser beam is defocused. In one embodiment, the defocusing profile of the laser beam is a modified top hat, or "quasi top hat." By using a defocused laser profile, the fluence delivered to the surface can be increased without damaging the underlying TCO at spot overlap region. This method minimizes the amount of residue left in on the exposed lower conductor layer and thus allows for better contact of the bus bar to the lower conductor layer.

Referring again to **Figures 4A** and **4B****,** after forming the BPE, bus bars are applied to the device, one on exposed area **435** of the first conductor layer (e.g., first TCO) and one on the opposite side of the device, on the second conductor layer (e.g., second TCO), on a portion of the second conductor layer that is not above the first conductor layer, see **425.** This placement of the bus bar 1 on the second conductor layer avoids coloration under the bus bar (analogous to bus bar 1 in **Figures 2A** or **3**) and the other associated issues with having a functional device under this bus bar. In this example, there are no laser isolation scribes necessary in fabrication of the device - this is a radical departure from conventional fabrication methods, where one or more isolation scribes leave non-functional device portions remaining in the final construct.

**Figures 4B** indicates cross-section cuts **Z-Z'** and **W-W'** of device **440.** The cross-sectional views of device **440** at **Z-Z'** and **W-W'** are shown in **Figure 4C****.** The depicted layers and dimensions are not to scale, but are meant to represent functionally the configuration. In this example, the diffusion barrier was removed when width **A** and width **B** were fabricated. Specifically, perimeter area **140** is free of first conductor layer and diffusion barrier; although in one embodiment the diffusion barrier is left intact to the edge of the substrate about the perimeter on one or more sides. In another embodiment, the diffusion barrier is co-extensive with the one or more material layers and the second conductor layer (thus width **A** is fabricated at a depth to the diffusion barrier, and width **B** is fabricated to a depth sufficient to remove the diffusion barrier). In this example, there is an overlapping portion, **445,** of the one or more material layers about three sides of the functional device. On one of these overlapping portions, on the second TCO, bus bar 1 is fabricated. In one embodiment, a vapor barrier layer is fabricated co-extensive with the second conductor layer. A vapor barrier is typically highly transparent, e.g. aluminum zinc oxide, a tin oxide, silicon dioxide and mixtures thereof, amorphous, crystalline or mixed amorphous-crystalline. In this embodiment, a portion of the vapor barrier is removed in order to expose the second conductor layer for bus bar 1. This exposed portion is analogous to area **435,** the BPE for bus bar 2. In certain embodiments, the vapor barrier layer is also electrically conductive, and exposure of the second conductor layer need not be performed, i.e. the bus bar may be fabricated on the vapor barrier layer. For example, the vapor barrier layer may be ITO, e.g. amorphous ITO, and thus be sufficiently electrically conductive for this purpose. The amorphous morphology of the vapor barrier may provide greater hermeticity than a crystalline morphology.

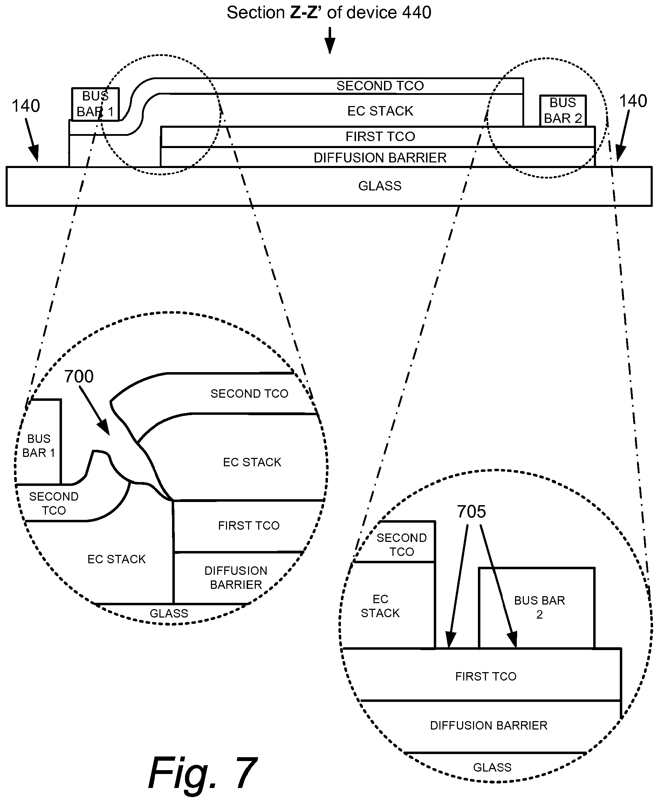

**Figure 4C** depicts the device layers overlying the first **TCO,** particularly the overlapping portion, **445.** Although not to scale, cross section Z-Z' for example, depicts the conformal nature of the layers of the EC stack and the second TCO following the shape and contour of the first TCO including the overlapping portion **445.** Cross section Z-Z' is reproduced in **Figure 7** and modified for illustrative purposes to show detail of a problem sometimes encountered with such overlapping configurations. Referring to **Figure 7****,** the transition to overlap **445,** where the upper device layers overlay the edge of the first TCO, e.g. depending upon the device materials and thickness of the layers, may form fissures, **700,** as depicted in the expanded portion (left). It is believed that these fissures are due to the stress related to the upper device layers having to follow an abrupt transition over the edge of the first TCO (in this example). Fissures **700** may form along the edges of the device where the overlying layers cover such abrupt edges. These fissures may cause electrical shorting, as there is an exposed path between the first and second TCO's, and ions may short the device as the ion conducting layer (or functional equivalent) is breached at the fissure. These shorts cause coloration aberrations and poor performance of the electrochromic device. Embodiments herein overcome this problem by tapering (sloping or otherwise modifying) the lower device layers about at least a portion of their edge, particularly the lower transparent conducting layer, so that the overlying layers will not encounter such stresses. This is referred to herein as "edge tapering." Although edge tapering is described in certain embodiments, other stress mitigation topology may be used such as edge rounding, stepping, and beveling. Also, combinations of stress mitigation topology may be used.

Referring to **Figure 8A****,** the edge portion, **800,** of the first TCO (diffusion barrier not depicted) is tapered, for example, by laser ablation. Thus **800** is an example of an edge taper. The tapered topography in this example is formed by a defocused laser (*supra*) so that smooth contours are formed rather than abrupt edges. In this example, the taper is a stepped contour, but this is not necessary. In a typical, but non-limiting example, a first TCO might be between about 0.25 µm and about 1 µm thick. The edge portion 800 having the tapered profile may be between about 0.25 µm and about 1000 µm wide, in another embodiment between about 0.5 µm and about 100 µm wide, in another embodiment between about 1 µm and about 10 µm wide. As described in relation to **Figures 4A** **and** **4B****,** the edge taper may be formed in the lower conductor layer before or after polishing of the lower conductor.

Referring again to **Figure 8A** and **also** **Figure 8B****,** after device fabrication (as indicated by the downward pointing arrow) a resulting electrochromic device as described above has overlapping portions of the one or more material layers and the top conductor layer around three sides. The portion, **805,** of the upper layers overlaps edge portion **800.** Because of the sloped nature of edge portion **800,** it is believed the overlying device layers in portion **805** no longer experience the stress levels otherwise encountered when an abrupt edge portion is below them. Portion **805** gradually transitions to portion **810** which lies on the glass substrate (or the diffusion barrier, not shown, portion **810** is analogous to portion **445 in** **Figure 4C**). In this example, the edge taper **800** is fabricated on three sides of the first TCO in accord with fabrication methods described herein, though, it can be done along any fraction of the perimeter of the TCO remaining after edge deletion (including the edge portion of the TCO along the substrate edge, i.e. that not removed by edge deletion). In one embodiment, edge taper is performed only about the perimeter edge of the TCO formed by edge deletion. In one embodiment, edge taper is performed only along that portion of the perimeter edge of the TCO formed by edge deletion and opposite side of the device as the BPE.

Although **Figure 8A** depicts the lower conductor layer as tapered, this need not be the case. Edge tapering can be done, e.g., after one or more other layers have been deposited on the lower conductor layer so long as the overall result is lowering of stress of subsequently deposited layers. One embodiment is an electrochromic device with one or more layers below the uppermost layer having an edge taper on at least some portion of their perimeter edge. One embodiment is an electrochromic device with one or more layers below the uppermost layer having a stress mitigation topology on at least some portion of their perimeter edge. The stress mitigation topology may include edge taper, edge rounding, stepping and/or beveling.

One embodiment is a method of fabricating an optical device, the method including tapering one or more edges of an underlying material layer prior to fabrication of overlapping layers thereon. In one embodiment, the underlying material layer is the lower conductor layer. In one embodiment, tapering one or more edges of the lower conductor layer includes laser ablation. In one embodiment the laser is defocused so as to create smooth contours in the tapered edge portion. In one embodiment, the lower conductor layer is polished before the edge taper. In one embodiment, the lower conductor layer is polished after the edge taper.

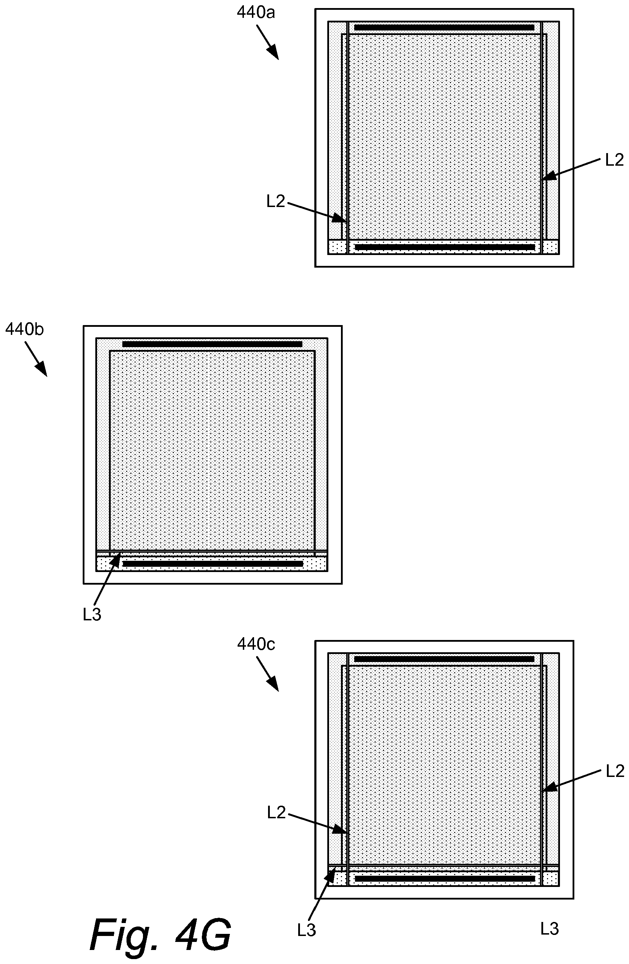

As described, one or more laser isolation scribes may be needed, depending upon design tolerances, material choice and the like. **Figure 4G** depicts top-views of three devices, **440a, 440b** and **440c,** each of which are variations on device **440** as depicted in **Figures 4B** and **4C****.** Device **440a** is similar to device **440,** but includes L2 scribes (see above) that isolate first portions of the EC device along the sides orthogonal to the sides with the bus bars. Device **440b** is similar to device **440,** but includes an L3 scribe isolating and deactivating a second portion of the device between the bus bar on the first (lower) conductor layer and the active region of the device. Device **440c** is similar to device **440,** but includes both the L2 scribes and the L3 scribe. Although the scribe line variations in **Figure 4G** are described in reference to devices **440a, 440b** and **440c,** these variations can be used for any of the optical devices and lites of embodiments described herein. Depending upon device materials, process conditions, aberrant defects found after fabrication, etc., one or more of these scribes may be added to ensure proper electrical isolation of the electrodes and therefore device function. Any of these devices may have a vapor barrier applied prior to, or after, one or all of these scribes. If applied after, the vapor barrier is not substantially electrically conductive; otherwise it would short out the device's electrodes when filling the laser scribe trenches. The above-described edge tapering may obviate the need for such scribes.

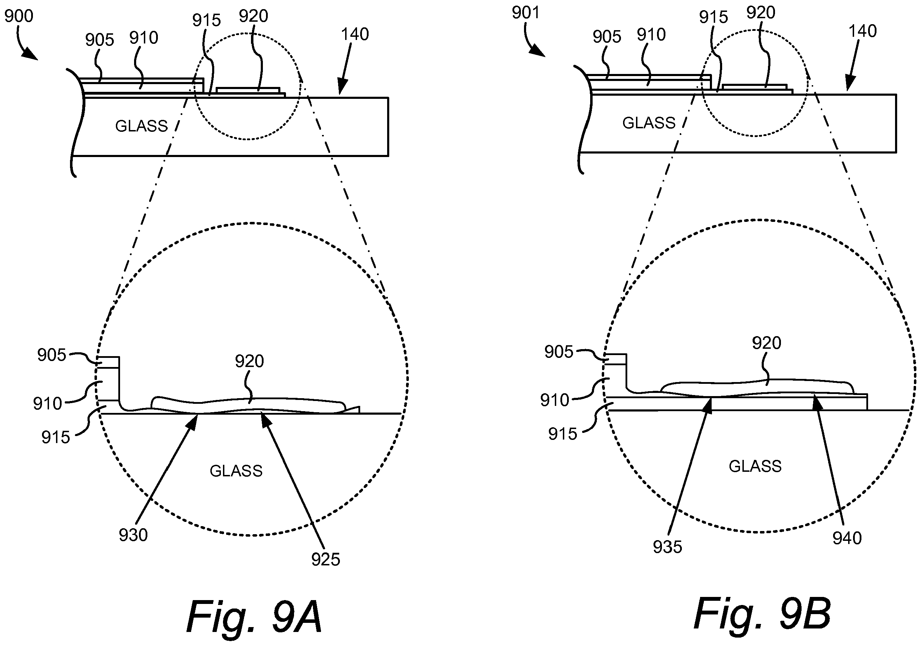

Referring again back to **Figure 7****,** the right side of **Figure 7** includes a detailed portion of the cross section Z-Z' illustrating a problem sometimes encountered with BPE formation. Specifically, during laser ablation of the bus bar pad expose area, upon which bus bar 2 resides in this figure, the laser may not ablate away the top layers or ablate the lower conductor layer (first TCO in this instance) uniformly. Thus, there may be problematic issues with proper electrical connectivity between the bus bar and the lower conductor layer in areas **705.** These issues are described in more detail with reference to **Figures 9A** and **9B****.**

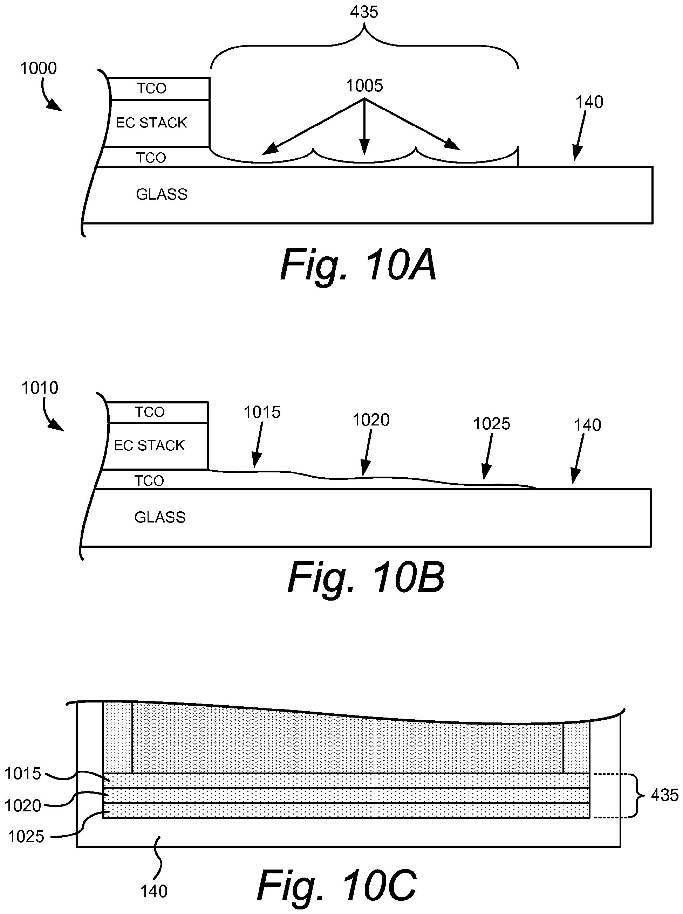

Referring to **Figure 9A****,** a cross section of an electrochromic device, **900,** having a top transparent conductor layer **905,** a device stack, **910,** and a lower transparent conductor layer, **915.** On a BPE of lower conductor layer **915,** is a bus bar, **920,** e.g., a silver ink bus bar. In the lower portion of **Figure 9A****,** in detail, is shown a problem with the BPE portion of layer **915.** Depending upon the device materials, laser settings, device state, etc., the BPE may not be of uniform thickness. In this example, the laser ablation was uneven, leaving areas, **930,** where conductor layer **915** was completely removed, and areas, **925,** where layer **915** remains. Areas **930** prevent electrical conduction to the device stack due to cutting off electrical connectivity in the lower TCO. Areas **930** typically span some portion of the BPE, if not all, and thus can be a problem. **Figure 9B** shows another problem that may occur. If the laser does not ablate deeply enough, in this example through the device stack, then there may be poor electrical connectivity between lower conductor **915** and bus bar **920.** In this example, there is electrical connectivity between bus bar **920** and conductor layer **915** in area **935,** where the device stack was penetrated by the laser during BPE, but a large area portion of the device stack remains between bus bar **920** and conductor layer **915** at area **940.** So, as illustrated in **Figure 9A****,** the laser may ablate too deeply, and as illustrated in **Figure 9B****,** the laser may not ablate sufficiently over the entire area of the BPE. This can happen, e.g., due to film absorption drift during laser ablation, both intra-device and inter-device. Methods described herein overcome these issues by applying varying laser ablation levels, e.g., along individual scribe lines during BPE fabrication. This is described in more detail in relation to **Figures 10A-F.**

**Figure 10A** depicts a cross sectional portion of an electrochromic device, **1000.** The lower TCO is ablated in areas **1005** along one side to form a BPE, **435.** In this example, each of three areas **1005** is ablated with a defocused laser such that the cross section is concave has depicted. In this example, each of the scribe lines is made at the same laser fluence level. Also, no overlap of the laser ablations was used, so that there are raised regions (in this case ridges) of the TCO material remaining between adjacent ablation lines. This is one example of using laser ablation of an overlying material down to an underlying conductor layer using varying laser ablation levels along a plurality of individual scribes. There are essentially three "knobs" for achieving variable ablation depth: pulse duration, fluence level and overlap of laser spot and/or pattern (line, shape formed by positioning of individual spots). In certain embodiments 100% overlap is used, e.g., multiple shots on a single spot location or multiple lines across the same area. Embodiments herein for achieving varying ablation depth use any one of these or any combination thereof.

One embodiment is a method of fabricating a BPE, the method comprising laser ablation of overlying material down to an underlying TCO layer using varying laser ablation levels along a plurality of individual scribe lines during fabrication of the BPE. In one embodiment, each of the individual scribe lines, of the plurality of scribe lines, is scribed using a quasi top hat at the same fluence level. Other patterns, besides lines, may be used so long as there is varying ablation depth. For example, a laser spot may be applied in a checkerboard pattern, with or without overlap of adjacent spots, where individual spots apply different pulse times to achieve varying ablation depth. In certain embodiments, at least two individual scribe lines, of the plurality of scribe lines, are scribed using a different fluence level for each line. Such embodiments are described in more detail below.

**Figure 10B** depicts a cross sectional portion of an electrochromic device, **1010,** of an embodiment. The electrochromic device, **1010,** has a BPE **435** formed via laser ablation of the lower TCO using varying ablation depth along a plurality of laser ablation lines **1015, 1020** and **1025,** along one edge of the device. In this example, the lines are formed by overlapping laser spots along each line, but where each line uses a different overlap percentage of the individual spots. In this example, there is also overlap of the lines; however in some embodiments there is no overlap between one or more lines. **Figure 10C** shows a top view of BPE **435** (any device described herein may have a BPE as described in relation to **Figures 10A-F**) that is made from three lines **1015, 1020** and **1025.** These lines each are of varying depth of ablation into the TCO relative to the other lines, but have substantially the same depth of ablation within any given line. By using varying ablation depth, e.g. using different fluence level of the laser spot, overlap in the spots or lines, pulse duration, and combinations thereof, the BPE has multiple depth profiles and accounts for problems associated with variation in film absorption during laser ablation. That is, if the laser doesn't ablate deeply enough, or ablates too deeply, there is still a sufficient amount of exposed TCO in order to make good electrical contact with the bus bar along the device edge and thus good performance and coloration front during operation of the device. In this example, the TCO is ablated progressively more deeply as the laser is moved from each line to the next, so that the BPE is progressively thinner at the outer edge and thicker at the innermost surface near the device stack. The BPE depicted in Figure 10B shows gently sloped transitions between lines indicating that laser ablation paths were overlapping partially. The final BPE is a three-stepped construct as depicted. By using varying ablation depth, good electrical contact between the bus bar and the BPE is ensured because even if there is absorption variation, there will be complete penetration to the lower TCO by at least one of the ablation lines.

In one embodiment, laser ablation is used to remove material from at least two lines along the edge of the EC device, along each line at a different ablation depth. In one embodiment, the ablation depth is selected from at least the upper 10% of the lower TCO, at least the upper 25% of the lower TCO, at least the upper 50% of the lower TCO, and at least the upper 75% of the lower TCO.

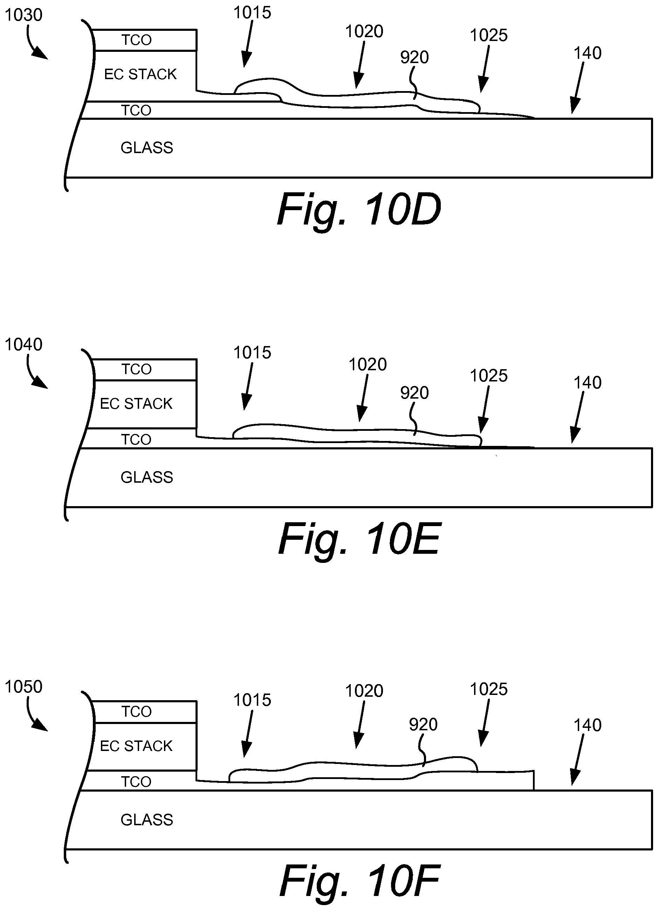

**Figure 10D** depicts a cross sectional portion of an electrochromic device, **1030,** of an embodiment. Referring to **Figure 10D****,** even if the materials above the bottom TCO vary in absorption from the calculated value, e.g. the laser ablation does not dig as deeply into the stack as calculated due to loss of absorption for some reason, since there are multiple lines at different depths, the BPE process is successful, i.e. good electrical connectivity with bus bar **920** is achieved. In the example depicted in **Figure 10D****,** the laser didn't ablate as deeply as calculated, e.g. line **1015** has some EC stack material remaining which would interfere with electrical contact between the BPE and a bus bar. But, lines **1020** and **1025** did penetrate down to the TCO and thus bus bar **920** makes good electrical contact with the lower TCO. **Figure 10E** depicts a cross sectional portion of an electrochromic device, **1040,** of an embodiment. **Figure 10E** depicts the scenario where the laser penetrates more deeply than calculated, e.g. when the absorption of the material layers drifts to a more increased state than expected. In this example, line **1025** has insufficient TCO thickness to conduct electricity properly, but the remaining lines, **1015** and **1020,** allow for good electrical connection with bus bar **920.**

**Figure 10F** depicts a cross sectional portion of an electrochromic device, **1050,** of an embodiment. **Figure 10F** illustrates that the varying depth of the laser lines need not be from less depth to more depth as one moves from inner portion of BPE to outer portion of BPE. In this example, the laser ablation depth is configured such that the BPE is thicker furthest from the EC device and thinnest closest to the device edge. This pattern may have advantage when, e.g., it is desirable to make absolutely sure there is no stack material between where the bus bar is fabricated on the BPE and the device stack. By penetrating more deeply into the TCO on the line (**1015**) proximate the EC device, this is achieved. In one embodiment, the laser is configured to progressively remove more of the underlying conductor layer in each of the plurality of scribe lines, the ablation area of each scribe line is overlapped at least partially with the ablation area of the previous scribe line, and plurality of scribe lines are fabricated with most removal of underlying conductor layer nearest to the device stack and least removal of underlying conductive layer furthest from the device stack. In one embodiment, the laser is configured to progressively remove more of the underlying conductor layer in each of the plurality of scribe lines, the ablation area of said at least two scribe lines is overlapped at least partially with the ablation area, and plurality of scribe lines are fabricated with least removal of underlying conductor layer nearest to the device stack and most removal of underlying conductive layer furthest from the device stack.

Although the varying fluence and/or overlap and/or pulse duration of laser ablation spots, lines or patterns in order to vary the ablation depth is described in reference to BPE fabrication, it can also be used to create the edge taper as described herein. Nor are these methods limited to those embodiments, e.g., they can also be used to create isolation trenches, e.g., where two or more lines are ablated at different depths to ensure proper electrical (and optionally ionic) isolation of one section of an EC device from another. In one embodiment, an L3 scribe is fabricated where two or more scribe lines are used to fabricate the L3 scribe and at least two scribe lines each have a different ablation depth, with or without overlap of the lines.

The above described fabrication methods are described in terms of rectangular optical devices, e.g. rectangular EC devices. This is not necessary, as they also apply to other shapes, regular or irregular. Also, the arrangement of overlapping device layers as well as BPE and other features may be along one or more sides of the device, depending upon the need. In order to more fully describe the scope of the embodiments, these features are described in more detail below with respect to other shapes and configurations. As described in relation to **Figures 4A** and **4B****,** the fabrications described below may also include other features such as polish of the lower transparent conductor layer, edge taper, multi-depth ablated BPE, etc. Description of these features was not given so as to avoid repetition, but one embodiment is any of the device configurations described below with one or more of the features described in relation to **Figures 4A** and **4B****.**

**Figure 4D** is a top view schematic drawing depicting fabrication steps analogous to that described in relation to the rectangular substrate in **Figure 4B****,** but on a round substrate, according to an embodiment. The substrate could also be oval. Thus as described previously, a first width **A** is removed, see **405.** The one or more material layers and second conductor layer (and optionally a vapor barrier) are applied over the substrate, see **410.** A second width **B** is removed from the entire perimeter of the substrate, see **415 (140a** is analogous to **140**). A BPE, **435a,** is fabricated as described herein, see **420.** Bus bars are applied, see **425,** to make device **440d** (thus, for example, in accord with methods described above, the at least one second bus bar is applied to the second conducting layer proximate the side of the optical device opposite the at least one exposed portion of the first conducting layer).

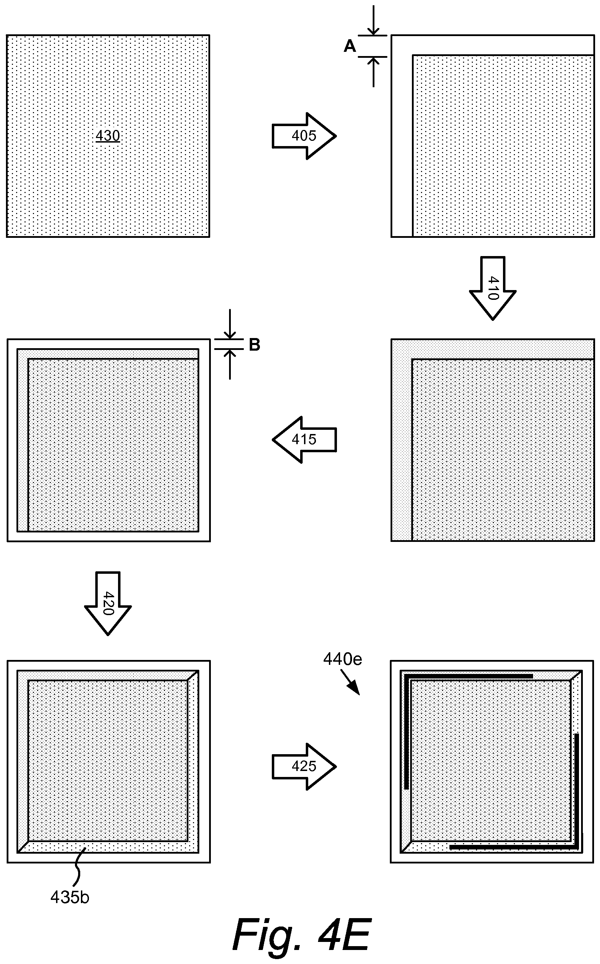

**Figure 4E** is a top view schematic depicting fabrication analogous to that described in relation to the rectangular substrate in **Figure 4B****,** but for angled bus bar application of an embodiment. Thus as described previously, a first width **A** is removed, see **405,** in this example from two orthogonal sides (one or both of the resulting edges of the lower TCO may have edge taper). The one or more material layers and second conductor layer (and optionally a vapor barrier) are applied over the substrate, see **410.** A second width **B** is removed from the entire perimeter of the substrate, see **415.** A BPE, **435b,** is fabricated as described herein; see **420,** in this example along orthogonal sides opposite those from which width **A** was removed. Bus bars are applied, see **425,** to make device **440e** (thus, for example, in accord with methods described above, the at least one second bus bar is applied to the second conducting layer proximate the side of the optical device opposite the at least one exposed portion of the first conducting layer). Angled bus bars are described in U.S. Patent Application, serial number 13/452,032, filed April 20, 2012, and titled "Angled Bus Bar," which is hereby incorporated by reference in its entirety. Angled bus bars have the advantages of decreasing switching speed and localized current "hot spots" in the device as well as more uniform transitions.

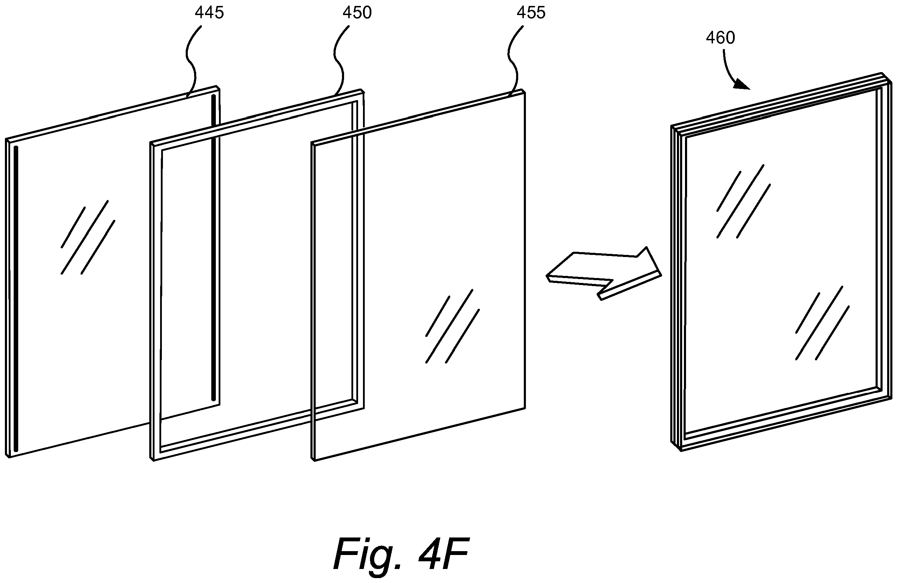

Whatever the shape of the device, it can be incorporated into an insulated glass unit. Preferably, the device is configured inside the IGU so as to protect it from moisture and the ambient. **Figure 4F** depicts IGU fabrication where the optical device, e.g. an electrochromic device is sealed within the IGU. IGU, **460,** including a first substantially transparent substrate, **445,** a spacer, **450,** and a second substantially transparent substrate, **455.** Substrate **445** has an electrochromic device fabricated thereon (bus bars are shown as dark vertical lines on substrate **445**). When the three components are combined, where spacer **450** is sandwiched in between and registered with substrates **445** and **455,** IGU **460** is formed. The IGU has an associated interior space defined by the faces of the substrates in contact with adhesive sealant between the substrates and the interior surfaces of the spacer, in order to hermetically seal the interior region and thus protect the interior from moisture and the ambient. This is commonly referred to as the primary seal of an IGU. A secondary seal includes an adhesive sealant applied around the spacer and between the panes of glass (the spacer has smaller length and width than the substrates so as to leave some space between the glass substrates from the outer edge to the spacer; this space is filled with sealant to form the secondary seal). In certain embodiments, any exposed areas of the first conducting layer are configured to be within the primary seal of the IGU. In one embodiment, any bus bars are also configured to be within the primary seal of the IGU. In one embodiment, the area of the second conductor layer that is not over the first conductor layer is also configured to be within the primary seal of the IGU. Conventional electrochromic IGU's configure the bus bars either outside the spacer (in the secondary seal) or inside the spacer (in the interior volume of the IGU) in the viewable area of the IGU (sometimes one in the secondary seal, the other in the viewable area). Conventional electrochromic IGU's also configure the EC device edges either running to the substrate edge or inside the spacer (within the interior volume of the IGU). The inventors have found it advantageous to configure the bus bars, laser scribes, and the like to be under the spacer, so as to keep them from the viewable area and, e.g., to free up the secondary seal so that electrical components therein do not interfere with the aforementioned features. Such IGU configurations are described in U.S. Patent Application, serial number 13/456,056, titled "Electrochromic Window Fabrication Methods," filed April 25, 2012, which is hereby incorporated by reference in its entirety. Controllers that fit into the secondary seal are described in U.S. Patent number 8,213,074, titled "Onboard Controllers for Multistate Windows," filed March 16, 2011. Methods described herein include sealing any exposed areas of the first conductor layer, edges of the device or overlapping regions of the one or more material layers, and the second conductor layer in the primary seal of the IGU. With or without a vapor barrier layer, such as silicon oxide, silicon aluminum oxide, silicon oxynitride, and the like, this sealing protocol provides superior moisture resistance to protect the electrochromic device while maximizing viewable area.

In certain embodiments, the fabrication methods described herein are performed using large-area float glass substrates, where a plurality of EC lites are fabricated on a single monolithic substrate and then the substrate is cut into individual EC lites. Similar, "coat then cut" methods are described in U.S. Patent number 8,164,818, filed November 8, 2010, and titled, "Electrochromic Window Fabrication Methods,".

In some embodiments, these fabrication principles are applied to the methods described herein, e.g., in relation to **Figures 4A - 4G****.**

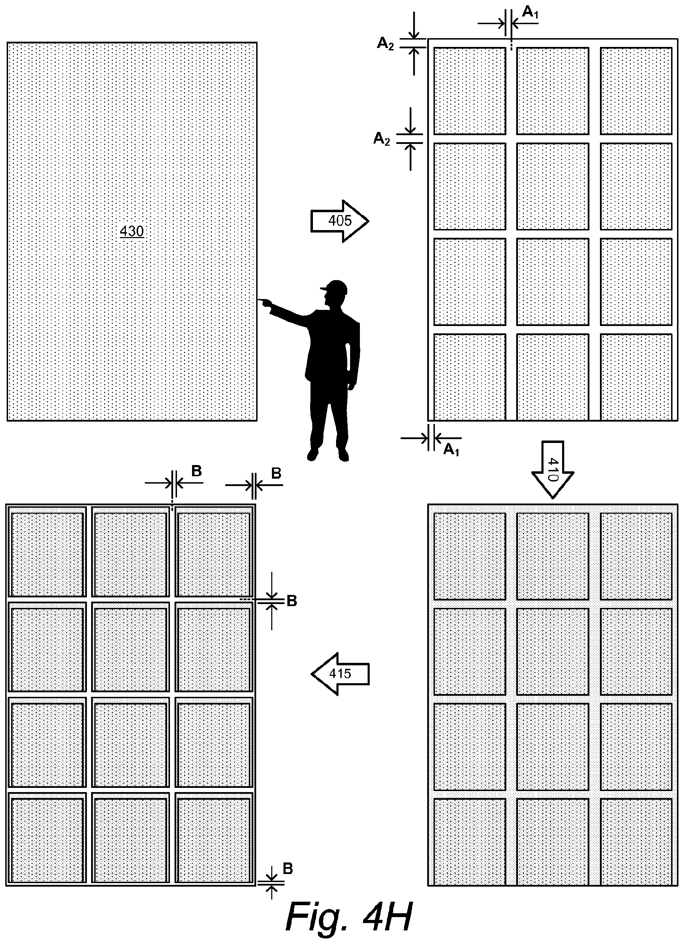

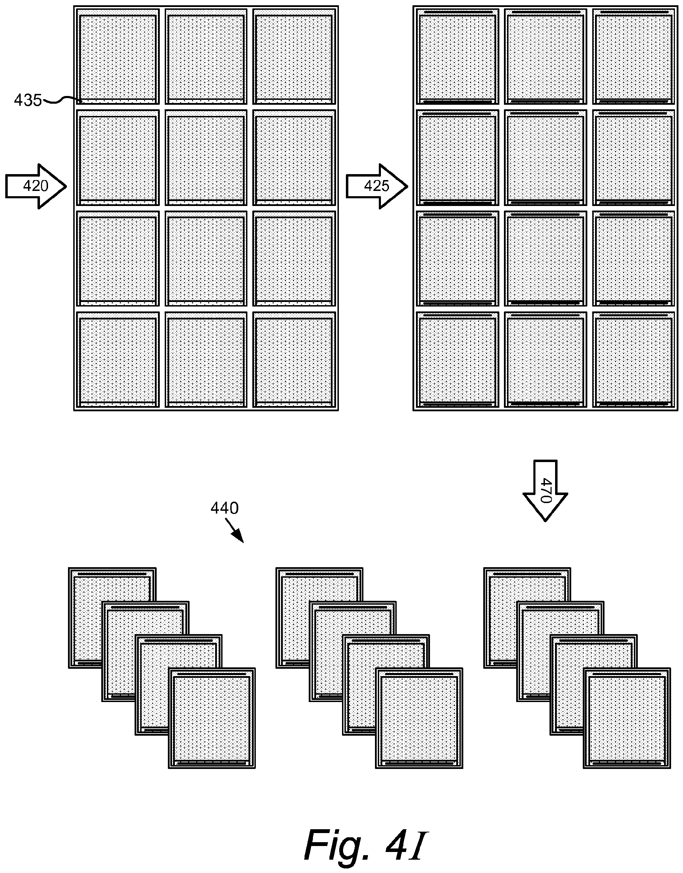

**Figures 4H** and **4I** depict an EC lite fabrication process flow, similar to that described in relation to **Figure 4A****,** but carried out on a large-area substrate as applied to coat then cut methods, according to embodiments. These fabrication methods can be used to make EC lites of varying shapes, e.g., as described herein, but in this example, rectangular EC lites are described. In this example, substrate **430** (e.g. as described in relation to **Figure 4A****,** coated with a transparent conducting oxide layer) is a large-area substrate, such as float glass, e.g. a sheet of glass that is 5 feet by 10 feet. Analogous to operation **405** as described in relation to **Figure 4A****,** edge deletion at a first width, **A,** is performed. Edge taper and/or polish may also be performed. In this example, since there are to be a plurality of EC devices (in this example, 12 devices) fabricated on a large substrate, the first width **A** may have one or more components. In this example, there are two components, **A₁** and **A₂**, to width **A.** First, there is a width **A₁**, along the vertical (as depicted) edges of the substrate. Since there are neighboring EC devices, the width **A₁** is reflected in a coating removal that is twice the width **A₁**. In other words, when the individual devices are cut from the bulk sheet, the cuts in between neighboring devices along the vertical (as depicted) dimension will evenly bi-furcate the area where the coating is removed. Thus "edge deletion" in these areas accounts for where glass edges will eventually exist after the glass is cut (see for example Figure 4I). Second, along the horizontal dimension, a second **A**-width component, **A₂**, is used. Note, in certain embodiments width **A₁** is used about the entire perimeter of the substrate; however, in this example more width is provided to accommodate the bus bar that will fabricated on the top transparent conductor layer (e.g. see **Figure 4C****,** bus bar 1). In this example, width **A₂** is the same both at the top and bottom edge of the substrate and between neighboring EC devices. This is because the fabrication is analogous to that described in relation to **Figure 4B****,** i.e., where the EC devices are cut from the substrate along the bottom of edge of the transparent conductor area for each device (see **Figure 4G**).

Next, in operation **410,** the remaining layers of the EC device are deposited over the entire substrate surface (save any areas where clamps might hold the glass in a carrier, for example). The substrate may be cleaned prior to operation **410,** e.g., to remove contaminants from the edge deletion. Also edge taper on each of the TCO areas may be performed. The remaining layers of the EC device encapsulate the isolated regions of the transparent conductor on the substrate, because they surround these areas of transparent conductor (except for the back face which resides against the substrate or intervening ion barrier layer). In one embodiment, operation **410** is performed in a controlled-ambient all PVD process, where the substrate doesn't leave the coating apparatus or break vacuum until all the layers are deposited.

In operation **415,** edge deletion at a second width, **B,** narrower than the first width **A,** is performed. In this example, second width **B** is uniform. In between neighboring devices, second width **B** is doubled to account for cutting the substrate along lines evenly between two devices so that the final devices have a uniform edge delete about them for the spacer to seal to the glass when an IGU is fabricated from each EC device. As illustrated in **Figure 4H****,** this second edge deletion isolates individual EC lites on the substrate. In certain embodiments, the second width **B** may be much smaller than that needed to accommodate a spacer for IGU fabrication. That is, the EC lite may be laminated to another substrate and thus only a small edge delete at width **B,** or in some embodiments no edge delete at the second width **B** is necessary.

Referring to **Figure 4I****,** operation **420** includes fabricating a BPE, **435,** where a portion of the EC device layers are removed to expose the lower conductor layer proximate the substrate. In this example, that portion is removed along the bottom (as depicted) edge of each EC device. Next, during operation **425,** bus bars are added to each device. In certain embodiments, the EC lites are excised from the substrate prior to bus bar application. The substrate now has completed EC devices. Next, the substrate is cut, operation **470,** to produce a plurality of EC lites **440,** in this example 12 lites. This is a radical departure from conventional coat then cut methods, where here, fully functional EC devices can be fabricated, including bus bars on a large area format glass sheet. In certain embodiments the individual EC lites are tested and optionally any defects mitigated prior to cutting the large format sheet.

Coat and then cut methods allow for high throughput manufacture because a plurality of EC devices can be fabricated on a single large area substrate, as well as tested and defect-mitigated prior to cutting the large format glass sheet into individual lites. In one embodiment, the large format glass pane is laminated with individual strengthening panes registered with each EC device prior to cutting the large format sheet. The bus bars may or may not be attached prior to lamination; for example, the mate lite may be coextensive with an area allowing some exposed portions of the top and bottom TCO's for subsequent bus bar attachment. In another example, the mate lite is a thin flexible material, such as a thin flexible glass described below, which is substantially co-extensive with the EC device or the entire large format sheet. The thin flexible mate lite is ablated (and lamination adhesive, if present in these areas) down to the first and second conductor layers so that bus bars may be attached to them as described herein. In yet another embodiment, the thin flexible mate lite, whether co-extensive with the entire large format sheet or the individual EC devices, is configured with apertures which are registered with the top conductor layer and the BPE during lamination. The bus bars are attached either before or after lamination with the mate lite, as the apertures allow for either operation sequence. The lamination and bus bar attachment may separately be performed prior to cutting the large sheet, or after.

In certain embodiments, when laminating, bus bar ink may be applied prior to lamination, where the ink is applied to the BPE and upper TCO, then pressed out from between these areas when laminated, e.g. to an aperture in the mate lite or continuing around the edge of the laminate, to allow lead attach at a point located outside the laminated area. In another embodiment, a flat foil tape is applied to the top conductor and the BPE, the foil tape extends beyond the laminated region, such that wires can be soldered to the tape after lamination. In these embodiments, cutting must precede lamination unless, e.g., the lamination mate lites do not cover the entire surface of the large format substrate (e.g. as described in relation to roll-to-roll embodiments herein).

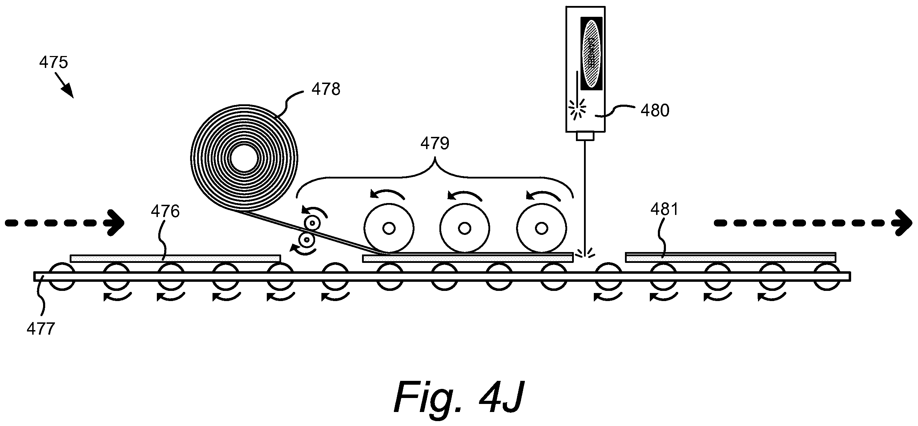

Lites **440,** laminated or not, may be incorporated into an IGU, e.g. as depicted in **Figure 4F****.** In one embodiment, the individual EC lites are incorporated into an IGU and then one or more of the EC lites of the IGU is laminated with a strengthening pane (mate lite) as described herein or in U.S. Patent number 8,164,818. In other embodiments, e.g. as described herein, lamination may include a flexible substrate, e.g. the aforementioned lamination of an IGU where the mate lite is a flexible substrate, or e.g., lamination of the EC lite directly to a flexible substrate. Further such embodiments are described in relation to **Figure 4J****.**

**Figure 4J** depicts roll-to-roll processing, **475,** forming laminates of electrochromic devices where the lamination uses a flexible mate lite. A substrate, **476,** is fed into a lamination line, in this example including a conveyer **477.** Substrate **476** may be an IGU with at least one EC lite incorporated, or substrate **476** can be a monolithic EC device, e.g., as described herein or substrate **476** can be a large format substrate with a plurality of EC lites fabricated thereon. In this example, a thin and flexible substrate, **478,** in this case a glass substrate is fed from a roll into the lamination line. In one embodiment one or more rolls are applied in parallel to a large format glass sheet including a plurality of EC devices, e.g., as described in relation to **Figure 4I**. For example, three separate and parallel rolls of the flexible substrate are fed into a lamination line that laminates the large format glass substrate lengthwise or widthwise such that three columns or rows of EC devices (see **Figure 4I****,** upper portion) are each laminated with the flexible substrate. Thus using roll-to-roll processing, large format glass sheets can be laminated with flexible mate lite material and cut into individual EC lites. The large format glass sheet may be cut as each row is laminated or after the entire sheet is laminated. In certain embodiments, individual EC lites, or IGU's containing them, are laminated with roll-to-roll processing. More detail of roll-to-roll processing is described below.

Exemplary flexible substrates include thin and durable glass materials, such as Gorilla^{®} Glass (e.g. between about 0.5 mm and about 2.0 mm thick) and Willow^{™} Glass, commercially available from Corning, Incorporated of Corning New York. In one embodiment, the flexible substrate is less than 0.3 mm thick, in another embodiment the flexible substrate is less 0.2 mm thick, and in another embodiment the flexible substrate is about 0.1 mm thick. In certain embodiments, the thin flexible low-sodium substrate may be less than 0.1 mm thick. Such substrates can be used in roll-to-roll processing. Referring again to **Figure 4J****,** adhesive is applied to substrate **476,** flexible substrate **478,** or both. Rollers **479** apply sufficient pressure to ensure good bonding between substrate **476** and flexible substrate **478.** Flexible substrate **478** is cut to match its lamination partner **476,** e.g., using a laser **480.** The final laminate structure, **481,** results. Using this roll-to-roll method, monolithic EC devices, IGU's or large format glass sheets bearing a plurality of EC lites can be strengthened with a thin flexible strengthening pane. These methods apply to any EC substrate, described herein or otherwise. In one embodiment, the monolithic EC lites as depicted in **Figure 4I****,** e.g. having been cut from the large area substrate, are fed into the lamination line to be laminated with the flexible substrate. In another embodiment, the large area substrate, having a plurality of EC devices fabricated thereon, is laminated with a flexible substrate of corresponding width, and after lamination, the individual, now laminated, EC devices are cut from the large area laminate, e.g., by row as lamination finishes or after lamination of the entire large format sheet. In another embodiment, the large area substrate, having a plurality of EC devices fabricated thereon, is laminated with a plurality of flexible substrates of corresponding width or length to individual EC lites, and after lamination, the EC devices, now laminated, are cut from the large area laminate, e.g. individually, or by row (or column).

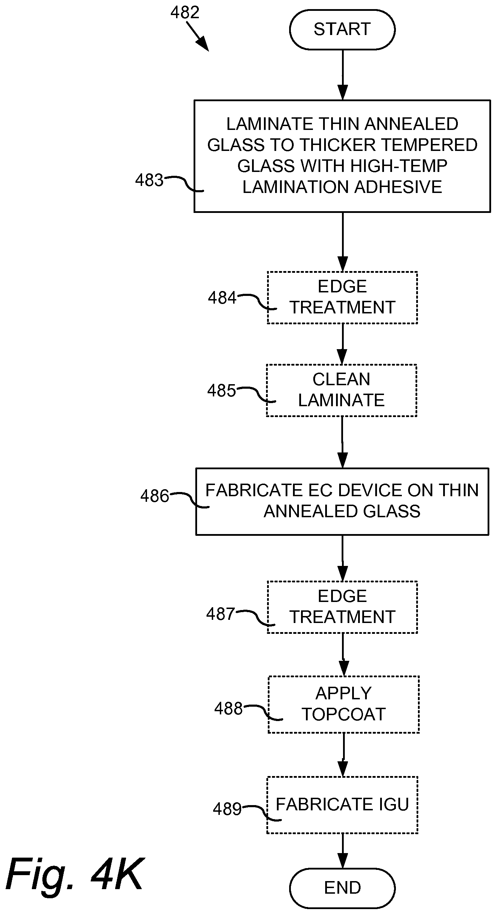

In the claimed embodiments of the invention, the thin flexible substrate is laminated to a non-annealed glass lite, e.g. a tempered or heat strengthened glass lite, and *then* the laminate produced is used as a substrate for an optical coating. These embodiments are particularly useful for applying a sputtered inorganic EC device to a flexible substrate, where the processing conditions required for the EC device fabrication include heating the substrate, particularly annealing at temperatures of between about 300°C and 450°C. Also, large sheets of these thin flexible substrates may be easier to handle with a support substrate. However, since flexible glass substrates may be very low defect surfaces and low-sodium, they can be excellent substrates on which to fabricate low-defect EC devices. Embodiments where a thin flexible substrate, for example the aforementioned low-sodium thin flexible glass, with or without a pre-applied transparent conductor layer, e.g. those commercially available from Coming, Incorporated of Corning New York, is first laminated to a support lite, and then an EC device is fabricated thereon, are described in relation to **Figure 4K****.**

**Figure 4K** describes aspects of a process flow, **482,** for fabricating an optical device in accordance with the claimed invention. Process flow **482** is described in terms of a thin flexible low-sodium glass laminated to a tempered glass or heat strengthened glass lite; however, that is only one embodiment of the lamination portion of the process flow. For example, a thin flexible glass can be laminated to a plastic substrate and then an EC device fabricated thereon (e.g. where the EC fabrication process does not require temperatures which the laminate could not withstand).

Referring to **Figure 4K****,** first, a thin flexible glass is laminated to a support lite, e.g. a tempered or heat strengthened lite, between about 2 mm and about 25 mm thick, in another embodiment between about 2 mm and about 12 mm thick, and in yet another embodiment between about 2 mm and about 6 mm thick, see **483.** If the thin flexible glass includes a transparent conductor layer, that layer may be positioned facing away from the lamination adhesive, in order to fabricate the optical device on the transparent conductor layer and thus use it as one of the conductors of the optical device. The transparent conductor layer can be oriented toward the lamination adhesive, e.g., if an extra low-E coating is desired in the final laminate structure, and in such embodiments, the other side of the thin flexible glass would need a transparent conductor layer.

The lamination is performed with a lamination adhesive appropriate for the optical device fabrication; i.e., one that will withstand the conditions of the fabrication process, including any annealing, baking or firing steps. According to the claimed invention, the lamination adhesive is capable of withstanding temperatures of between 300°C and 450°C. In certain embodiments, a high-temperature lamination adhesive is used, e.g. a silicone based adhesive. One type of such silicone based adhesives is described in US Patent Publication, US 2012/0156457, filed February 24, 2012. The silicon based adhesive described in the aforementioned patent publication allows a thin flexible substrate to be bonded to a supporting substrate and then debonded from the supporting substrate after processing, particularly high temperature processing, e.g. at or about 400°C. In the claimed embodiments, the lamination adhesive forms a permanent lamination bond. In lower temperature regimes, e.g. in one embodiment less than 300°C, in another embodiment less than 200°C, epoxy based lamination adhesives can be used. Any suitable lamination adhesive will suffice, so long as the adhesive holds up to the processing conditions for fabricating the optical device. In some cases, the lamination adhesive is an optically clear adhesive. Silicone adhesives are an attractive choice because they can be formulated to have low volatile organic components (low-VOC) or even zero-VOC. In addition, silicon adhesives can be formulated to remain optically clear during processing. This is useful, e.g., when using the laminates described herein as substrates for an all inorganic, e.g. sputtered, and heat treated (annealed, baked or fired) EC coating, because, e.g. in an integrated vacuum coater system, volatile components are to be avoided as they can affect holding a stable vacuum and/or contaminate the deposited (e.g. sputtered) layers. Typically, a silicone based lamination adhesive will be cured at between 100°C and about 250°C prior to fabricating an optical device thereon, but in certain embodiments the curing process is performed during EC fabrication. The laminate formed in step **483** should have a uniform surface, e.g., the lamination adhesive should be uniformly distributed, both in thickness and devoid of bubbles, between the tempered lite and the flexible annealed glass substrate. Having a uniform (e.g. substantially planar) surface on the flexible substrate is important for uniformity of deposited layers thereon. For an absorptive device, e.g., the lamination adhesive should have good clarity, low haze, and sufficient light transmission for the ultimate optical device's specifications. The lamination layer can be colored, or not, depending on the need. A colored lamination layer can be used to offset unwanted color in another part of the optical device, or used to enhance an existing color. If yellowing of the lamination adhesive occurs during processing, the support lite's color may be chosen to make the final product's color space conform to specification. Dyes that may be used in the lamination layer are preferably highly stable to heat and ultraviolet (UV) radiation. If inorganic pigments are chosen, they should not catalyze breakdown of the lamination adhesive under heat or UV. In one embodiment, the lamination adhesive is formulated to have lateral give, so that the difference in the coefficient of thermal expansion between the support lite and the thin flexible lite is accommodated without breakage due to thermal shock.

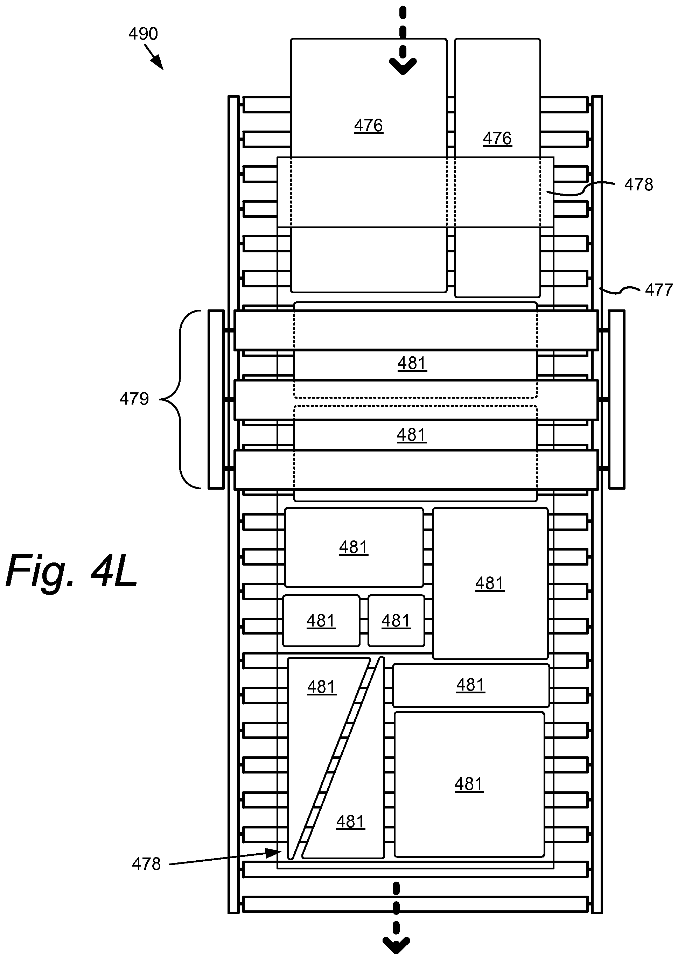

In one embodiment, the laminate is fabricated as described in relation to **Figure 4J****,** but where substrate **476** (e.g. a tempered or heat strengthened glass or a plastic substrate) does not have an EC device thereon. Laser **480** may be used not only to cut the laminate free from the bulk roll of **478,** but also to perform an edge treatment as described below. The flexible substrate, **478,** may be a large format roll, e.g. one-half meter to three meters wide and, e.g., tens of meters or hundreds of meters long, e.g. up to 300 meters long. Multiple lites **476** may be laminated in parallel (e.g. side by side). In one example, lites **476** are arranged on a roller system in patterns that maximize efficient use of the flexible substrate **476.** This is illustrated in **Figure 4L****.**

**Figure 4L** depicts a top view of a lamination apparatus, **490.** The lamination process performed in apparatus **490** is much like that described with respect to **Figure 4J****,** except substrates **476** do not have EC devices thereon, they are support substrates for thin flexible substrate **478,** e.g. thin flexible annealed low-sodium glass. Substrates **476** are fed onto, e.g., roller conveyer **477,** the lites are laminated as described in relation to **Figure 4K****,** to form laminates **481** (in this example using large rollers **479,** however, such automated lamination may include large planar presses, vacuum bag technology, heaters and the like as would be appreciated by skilled artisans). In this example, substrates **476** are of varying sizes and shapes, and are arranged to maximize usable area of flexible substrate **478** (in **Figure 4L****,** substrates **476** and laminates **481** are depicted with solid white fill so as to simplify the figure). Substrates **476,** e.g., may be as large as 72 inches x 120 inches. In this example, as substrate **478** exits the lamination process (large rollers **479**), laminates **481** are still attached to the bulk substrate **478.** Individual laminates **481** are cut free from the bulk sheet, e.g. using a laser (e.g. laser **480** in **Figure 4J**) or electrothermally and/or mechanical glass cutting. The excess thin glass **478** that is removed from the perimeter of each laminate can be recycled. In certain examples, the roller conveyer **477** transporting the substrates **476** may have narrow spacing (e.g., spacing between 1 inch and 3 inches), at least before the lamination process, between adjacent rollers to reduce the possibility of breakage of the substrates. In addition or as an alternative, the substrates **476** may be heated before the lamination process such that the substrates **476** are placed under compression under cooling which may further to reduce the possibility of breakage of the substrates **476.**

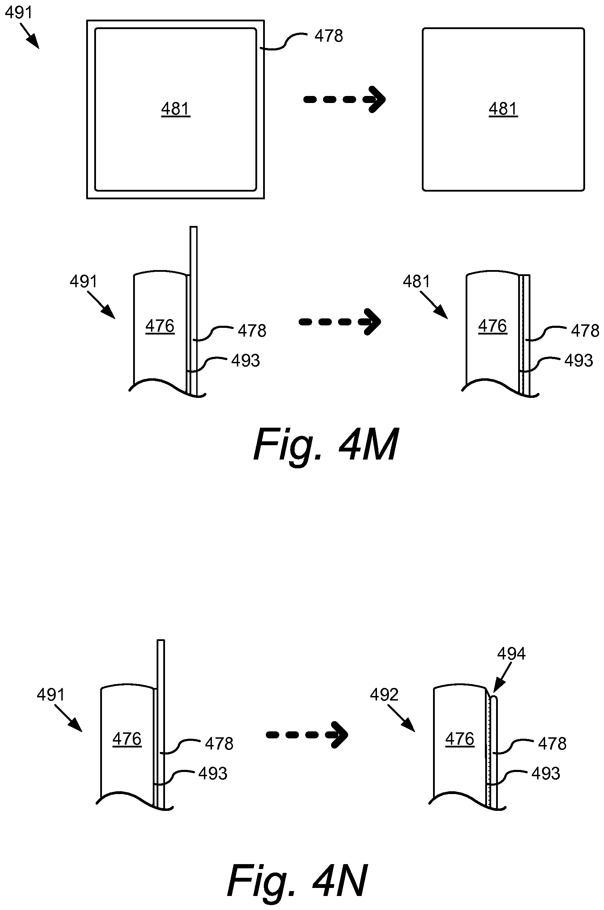

When laminates **481** are cut from the bulk sheet, the thin flexible substrate may be cut larger than support lite **476,** this is depicted in **Figure 4M****.** Construct **491** is a laminate **481** cut free from the bulk sheet of thin flexible glass **478,** where a perimeter overhang of thin flexible glass **478** remains (note lamination adhesive **493**). This construct may be desirable so that more precise cutting of the thin glass can be done away from the high throughput lamination setting. As depicted in **Figure 4M****,** the thin glass may be cut to match the area of the support lite **476.** **Figure 4M** shows top and side views of this. **Figure 4N** depicts that the thin flexible glass may be cut set-back (smaller area) than the support lite **476** to make a laminate **492.** This may be done to help protect the edges of annealed glass. One of ordinary skill in the art would appreciate that constructs **491, 481** and **492** may be fabricated without using a large format (e.g. a roll or large ribbon of) flexible glass. For example, using pre-cut flexible lites slightly larger than, the same size as, or smaller than, the area of the support lite **476,** constructs **491, 481** and **492** maybe be fabricated, respectively.

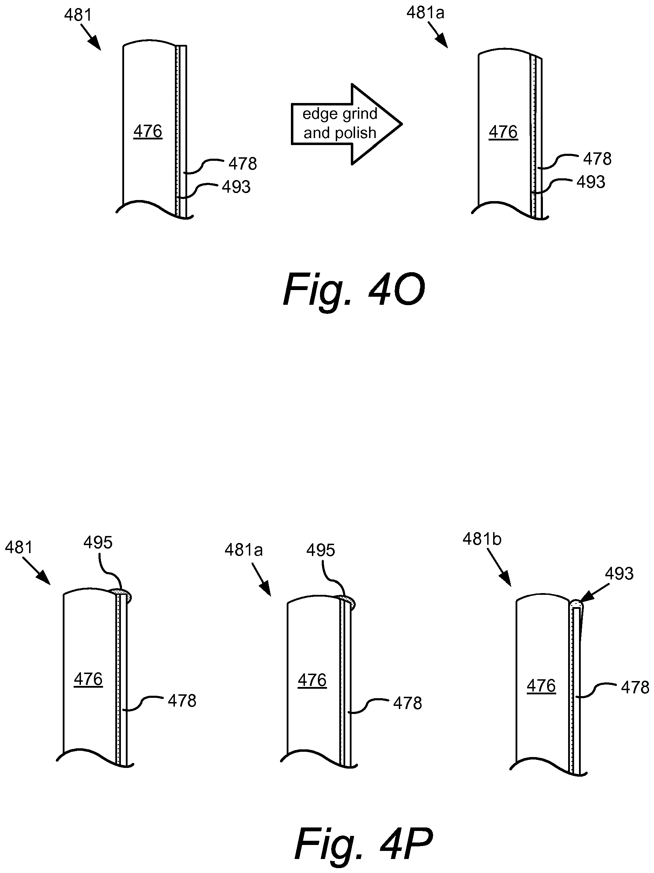

Referring again to process flow **482** in **Figure 4K****,** an edge treatment is optionally applied to the laminate, see **484.** An edge treatment may include a grinding and/or polishing procedure to improve the edge strength or more fully protect and/or secure the edge of the thin flexible substrate. In one embodiment, the edge of the thin flexible glass partner is heated to high temperature to melt the glass around the perimeter, thereby removing microfissures and inducing stress in the edge for added strength. In one embodiment, the flexible thin annealed glass' edge is ground and/or polished after lamination, e.g. laminate **481** is a "rough cut" laminate, e.g. mechanically cut, that is put through an edge grind and polish process to strengthen the edge of the thin annealed lite (the tempered light typically will already have a ground and polished edge). In the resulting structure, although the area ("footprint") of the tempered support lite and the thin flexible lite are the same, the outermost edge of the thin glass is beveled, e.g. to approximate the curvature of the tempered lite's ground (and optionally polished) edge. This is depicted in **Figure 4O****,** laminate **481a.** The thin annealed lite of laminate **481** has a rectangular cross-section at the edge, but after edge grinding, and optionally polishing, the edge is rounded or angled and more resistant to breakage, see laminate **481a.** The surface areas of the mating surfaces adjacent to lamination adhesive **493** are the same, there is no set back, yet the outer (rightmost) corner of flexible glass **478**'s edge is protected by virtue of the edge curvature (or angle). Since the support lite is typically a tempered glass lite with a pre-existing edge grind and polish, this edge treatment may include only grinding and/or polishing or modification of the annealed glass edge. In some cases, edge treatment with grinding/polishing as described with respect to **Figure 4P** could require frequent treatment of the polishing wheel to remove residue.

While not wishing to be bound by theory, it is believed that when very thin flexible annealed glass is laminated to a thicker tempered lite, the edge grind and/or polish could be performed so as to remove material from both lites of the laminate. That is, if a small thickness of material is to be ground from the tempered lite during the process, as long as one does not penetrate the tension zone of the tempered lite, and sufficient material in the compression zone remains after the edge grind, the laminate can be edge ground, where both the tempered lite and the annealed lite are ground together to form an even curvature. One embodiment is a method of forming a laminate, including laminating a tempered lite to a thinner annealed lite, and then edge grinding the laminate where both the tempered lite and the annealed lite's edges are ground simultaneously. The resulting edge would look much like that of laminate **481a,** but may have better C2 symmetry along an axis centered on and parallel to the cross section as depicted.

In typical embodiments a tempered or heat strengthened lite is used for the support substrate, where the edge of the support substrate has a ground and optionally polished edge prior to the lamination. The flexible lite's edge is treated before or after lamination. For example, an epoxy (e.g., Somos^{®} ProtoGen O-XT 18420 epoxy) may be applied to a mechanically cut annealed thin flexible glass, before or after the thin flexible glass is fabricated into the aforementioned laminate. Since mechanically cut glass has an edge strength that may not be as high as laser or electrothermally cut glass, an edge adhesive, e.g. an epoxy, is applied to the perimeter of the glass to prevent the glass from breaking or cracking under thermal stress. Certain epoxy adhesives can withstand high temperatures, e.g. between about 300°C and about 400°C, but may yellow under such conditions. Since the epoxy is at the edges, any yellowing would not be a problem, as these edges would be hidden from view when, e.g., the laminated pane is fabricated into an IGU or installed with an associated framing system. Other materials may be applied to a mechanically cut annealed thin flexible glass, before or after the thin flexible glass is fabricated into the aforementioned laminate such as, for example, ABS plastic, polypropylene (e.g., Polypro^{®} PD626polypropylene), and Urethane/polypropylene blend (e.g., such as Santoprene^{®} Urethane/polypropylene blend). In addition, the flexible lite's edge may be treated before or after lamination edge treatments to additional edge treatments. For example, acid etching of the edges could be used to blunt crack tips. In some cases, the treatment of the flexible lite's edge may involve material tape, which is wrapped around the edge. In some cases, the material tape may be encapsulated within the IGU frame such that it is not visible to a viewer.

**Figure 4P** depicts cross sections of two laminates where an edge adhesive, **495,** is applied. In this figure, edge adhesive **495** is applied to laminate **481** and **481a.** Note that the edge adhesive may coat not only the edge but part of the face of the laminate about the perimeter. In one embodiment, the edge adhesive does not cover more than about a 1 mm wide band of the perimeter of the annealed glass lite of the laminate, in another embodiment, the edge adhesive does not cover more than about a 2 mm wide band of the perimeter of the annealed glass lite of the laminate, in yet another embodiment, the edge adhesive does not cover more than about a 3 mm wide band of the perimeter of the annealed glass lite of the laminate.

Edge adhesives, such as epoxy, may be formulated with very low viscosity in order to ensure that they not only cover the edge of the annealed lite, but also penetrate microcracks in the glass and bond them together. The edge adhesive may be applied in two or more applications, e.g., a low viscosity adhesive is applied to seal and bond any microcracks or defects in the glass edge, and then a more viscous adhesive is applied to provide a thicker barrier, e.g. a "bead" of material that serves as a bumper to protect the edge from physical contact during handling.

Application of an edge adhesive is optional, because in certain embodiments, the lamination adhesive is engineered to both serve as a bonding agent between the two glass substrates, but also as an edge adhesive as described above. In one embodiment, during the lamination process, sufficient lamination adhesive is squeezed from between the substrates so as to coat the edge of the thin flexible substrate and provide an edge adhesive. This is illustrated in **Figure 4P****,** see laminate **481b.** Laminate **481b,** in this example but not necessarily, has a set back thin annealed lite. Lamination adhesive **493** forms a bead around the perimeter edge of annealed lite **478** and protects it from breakage. In other embodiments, any lamination adhesive is removed from the edges, and a separate edge adhesive is applied thereafter, e.g. a silicone based lamination adhesive is used for lamination, and an epoxy edge adhesive is applied thereafter. In one embodiment, both the lamination adhesive and an applied edge adhesive are used to protect the glass edge, for example a laminate such as **481b** may have an edge adhesive applied over the bead of lamination adhesive **493** about the perimeter of the laminate.

In one embodiment, etching, heating or the like is performed prior to application of an edge adhesive or in lieu of application of an edge adhesive. For example, in one embodiment, a laser is used to strengthen the edge of the thin flexible substrate, before and/or after lamination to the support substrate. Lasers may be used, e.g., to cut away weak edge material, or, e.g., to heat the edge and melt any microcracks, thereby adding stress and strength to the edge. In certain embodiments some of the edge stress may be relieved during the heating associated with EC fabrication.

While not wishing to be bound by theory, it is believed that edge treatments may not only improve durability of the laminate EC device in the field (e.g. stability during thermal shock), but also improve durability so that the laminate can survive high temperatures associated with certain EC fabrication processes.

Referring again to process flow **482** of **Figure 4K****,** the lamination is preferably carried out in a clean, low-particulate environment. However, since the optical device fabrication occurs after lamination, the laminate may optionally be cleaned prior to, e.g. EC device fabrication, see **485.** Cleaning is performed, e.g., using commercially available glass cleaning apparatus.

After the optional edge treatment and/or optional cleaning, an EC device is fabricated on the thin flexible glass substrate, see **486.** Exemplary methods for fabricating EC devices are described herein, e.g. in relation to **Figure 4A-E,** although other methods can be used without escaping the scope of the "EC fabrication" aspect of process flow **482.** Note, the optional polishing process (described herein) of the lower transparent conductor layer may be avoided by using the thin flexible annealed glass substrates, such as Corning's products described above, because these glass substrates have a pristine surface and are highly uniform.

In certain embodiments, where the flexible glass substrate does not have a pre-applied transparent conductor thereon, the first transparent conductor is applied as part of the fabrication process flow. For example, an EC device is fabricated on the thin flexible substrate as in process flow **400** described herein, but including fabrication of the first transparent conductor thereon. One embodiment is a method of fabricating an EC device as described herein, where the substrate is a laminate as described in relation to **Figures 4K-Q.**

After fabrication of the EC device, optionally an edge treatment is performed, see **487.** For example, if no edge treatment was performed in process step **484,** then one can be performed after the EC fabrication. Also, as part of the EC fabrication, e.g. during laser edge deletion (LED), the edge of the thin annealed glass may be detrimentally affected and need a further edge treatment after EC fabrication. In other embodiments, edge treatment prior to EC fabrication includes application of an edge adhesive that is cured during the EC fabrication, or after EC fabrication. Aspects **484** and **487** contemplate the latter example. For example, an edge adhesive is applied as an edge treatment in **484.** The edge adhesive's curing process is catalyzed by components of a sputter deposition process to fabricate the EC device, but also require heating performed after deposition of the EC device. In another example, an edge adhesive is applied at **484,** e.g. an epoxy or a silicone based adhesive, but the adhesive requires heating performed after deposition of the EC device to fully cure. In another example, a first edge adhesive, with or without mechanical edge modification, is applied to the thin flexible annealed glass edge at **484.** The heating of the EC fabrication process allows the first edge adhesive to flow more freely and enter any microcracks and defects at the glass edge. After the EC device fabrication, a second edge adhesive is applied, before or after the EC laminate cools to ambient.

Referring again to **Figure 4K****,** after the second optional edge treatment, a top coat is optionally applied to the EC device to protect it, see **488.** A top coat may be added as an encapsulant, e.g., as a hermetic seal to protect the laminate from the ambient. In certain embodiments, the encapsulant also serves as an edge adhesive as described herein. For example, in one embodiment, the encapsulant is a parylene, e.g. parylene AF-4 (a para-xylylene derivative which is also teflon derivative). In another embodiment, the top coat is a silicone or epoxy based encapsulant such as those commercially available from e.g. Polysciences, Inc. of Warrington, Pennsylvania or those available from Dow Corning Corporation, of Midland Michigan. These encapsulants can also be adhesives, therefore in certain embodiments the topcoat procedure also protect the edges of the annealed thin glass, and thus is used in lieu of, or in addition to, edge treatments. In one embodiment, the process flow **482** does not include **484** or **487,** but rather the topcoat application, **488,** is all that is necessary to protect the edges of the thin annealed glass substrate (as well as the EC device as a whole). In other embodiments, one or more edge treatments as described herein are combined with the topcoat for a more robust laminate that can withstand both temperature changes as well as ambient exposure and impact.

Referring again to **Figure 4K****,** after the optional topcoat, the laminate is optionally incorporated into an IGU, see **489.** Since methods described herein may produce a strong laminate, incorporation into an IGU is optional. The laminate may be further strengthened by laminating another tempered, heat strengthened or polymeric lite to the EC device in order to protect the flexible annealed lite and/or the EC device from impact.

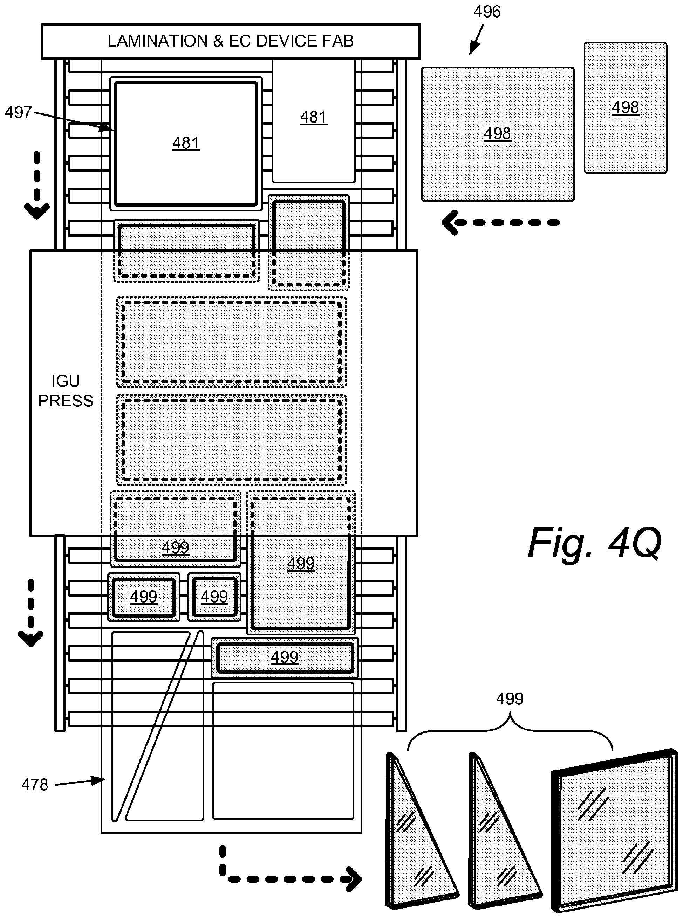

In one embodiment, the laminate is incorporated into an IGU, where the optical device, e.g. an EC device, is in the interior volume of the IGU. This may be done before or after excising the laminates from the bulk sheet **478** (see **Figure 4Q** for the latter). In such embodiments, the EC device may or may not have a topcoat and/or extra lite laminated to the EC device side, because the interior volume protects the EC device. In one embodiment the laminate does include a topcoat and is also incorporated into an IGU where the EC device is within the interior volume of the IGU. This construction is useful, e.g., if the IGU's interior-proximate pane and/or the primary and secondary seals should fail, the EC device will be protected from the ambient by the topcoat. The IGU may have only a single laminate as described herein, e.g. a double pane IGU where the mate lite of the IGU is a single glass lite. In other embodiments, the IGU is a double pane construct with two laminates as described herein serving as the two panes of the IGU. Triple pane IGU's are also within the scope of the embodiments described herein, with one, two or three laminates as described herein.

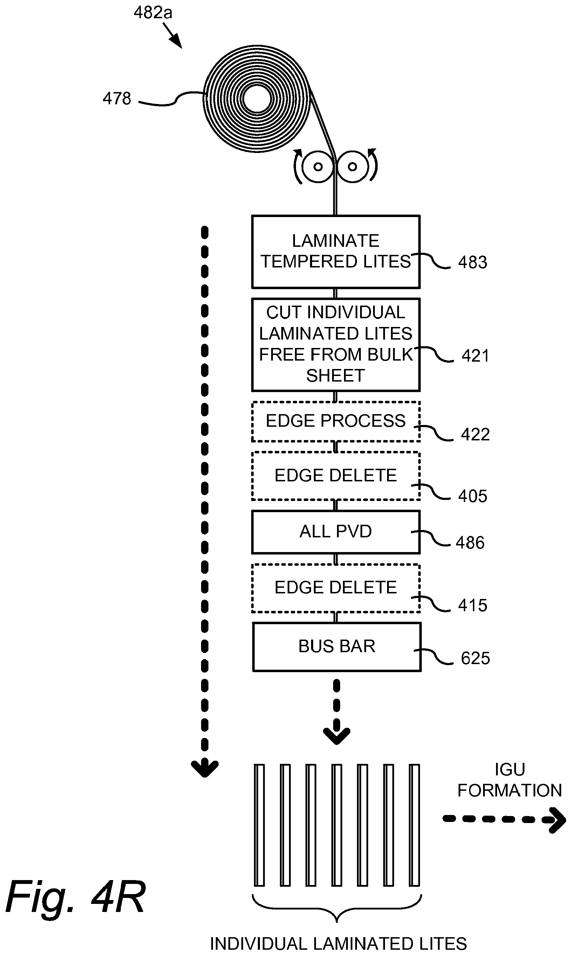

In certain embodiments, a tempered or heat strengthened glass sheet is laminated to a thin annealed glass sheet and then an EC device coating is fabricated thereon. **Figure 4R** depicts a process flow, **482a,** much like process flow **482** as described in **Figure 4K****.** In this particular process flow, the tempered or heat strengthened glass sheet is laminated to the annealed glass, where the annealed glass is in a roll, **478.** The individual tempered or heat strengthened glass sheets are laminated to the annealed glass using high temperature lamination adhesive as described herein, see **483.** The laminates are cut from the bulk sheet of annealed glass, see **421.** Optionally edge processing is performed, **422,** where the laminates edges are ground, adhesive is applied, and the like as described herein, e.g. in relation to **Figures 4M-P.** As described in relation to **Figure 4B****,** edge deletion may be performed if the annealed glass has a transparent conductive coating already applied, see **405.** Next, e.g. an all PVD process is used to deposit an EC coating thereon, see **486.** As described in relation to **Figure 4B****,** another edge deletion may be performed, see **415.** Next bus bars are attached, see **625,** after BPE is formed if needed (not depicted). The EC device laminates may be optionally incorporated in IGUs.

Referring to **Figures 4L** and **4Q****,** now having an understanding of the embodiments above, it is noted, that the individual laminates need not be cut free from the bulk sheet until *after* the optical device is applied to the bulk sheet, or even until after an IGU construct is fabricated. **Figure 4Q** shows an IGU assembly line and associated process flow, **496.** That is, in one embodiment, the bulk sheet with the laminates attached thereto is run through an optical coating fabrication process as described herein, as indicated by the box at the top of **Figure 4Q****.** This would be consistent with steps **483** and **486** of process flow 482 as described in relation to **Figure 4K****,** specifically where laminates **481** are not cut from the bulk sheet until after IGU formation. Referring to **Figure 4Q****,** laminates **481** are formed and complete EC devices are fabricated on the thin annealed glass, **478,** side of each laminate, including an optional top coating, bus bars and associated wiring. In one embodiment, the bus bars (and optionally the wiring thereto) are fabricated and the top coat applied thereafter. This avoids having to penetrate the top coat to apply bus bars. After the bulk thin flexible annealed sheet leaves the lamination EC fabrication portion of the assembly line, each individual laminate now has an optical device thereon (e.g. an EC device, even more particularly a solid state and inorganic EC device, even more particularly an all PVD solid state and inorganic EC device). IGU spacers, **497,** are applied to each laminate, still attached to the bulk sheet, as well as mate lites, **498,** in this example the mate lites are tinted to aid in visualization. In one embodiment, the spacers are pre-wired spacers as described in Patent Application, serial number PCT/US2012/068950, filed December 11, 2012. Such IGU spacers have wiring for bus bars integral to them, and some include contacts on the glass to spacer mating surface which, in certain embodiments, obviate the need for bus bars. The spacer and/or mate lite has an adhesive applied to it, and they are collectively registered with each laminate **481** before it enters an IGU press, where the IGU's are formed. The primary seal is thus formed during IGU formation. In one embodiment, the adhesive is a conventional IGU primary sealant such as PVB. In certain embodiments, the adhesive is an epoxy adhesive/sealant. As described above, epoxy based adhesives may impart added durability to the thin annealed glass edge. In one embodiment, there is no edge treatment as described in relation to process flow 482 of Figure 4K, but rather the epoxy based primary sealant applied during IGU formation is sufficient to both protect the annealed glass edge, but also to form a superior primary seal.

The IGU's **499** emerge from the press with their primary seals formed, the EC device hermetically sealed within the IGU, while still attached to the bulk sheet **478.** After the completed IGU's are fabricated they are excised from the bulk sheet. As mentioned above, the excess bulk sheet can be recycled thereafter. The IGU's may have secondary sealant applied before or after excision from the bulk sheet, but typically this is done after, so as not to interfere with cutting them free of the sheet. Process flow **496** can be done horizontally, or vertically - with the appropriate carriers to support the thin substrate with attached laminates and ultimately IGU's.

In accord with, but not limited by, the methods described herein, further embodiments include optical devices, laminates, IGU's and related articles.

One embodiment is an optical device laminate including: i) a first substrate including a material selected from the group consisting of tempered glass, heat strengthened glass, chemically strengthened glass and a polymer; ii) a second substrate laminated to the first substrate, where the second substrate is a low-sodium annealed glass; iii) a lamination adhesive between the first and second substrates, the lamination adhesive capable of withstanding temperatures of between about 300°C and 450°C; and iv) an optical device on the outer surface of the second substrate. In one embodiment, the second substrate is between about 0.5 mm and about 2.0 mm thick, in another embodiment the second substrate is less than 0.3 mm thick, in another embodiment the second substrate is less 0.2 mm thick, in yet another embodiment the second substrate is less than 0.1 mm thick. In one embodiment, the optical device is a solid state and inorganic electrochromic device. In one embodiment, the first substrate is a tempered glass lite. In one embodiment, the tempered glass lite is between about 2 mm and about 25 mm thick.

In certain embodiments, the second substrate is larger than the first substrate such that there is an overhang of the second substrate about the perimeter of the first substrate. In other embodiments, the second substrate is set back from the first substrate about the perimeter of the laminate.

The second substrate may include an edge treatment. In one embodiment, the edge treatment includes an edge adhesive. The edge treatment may include an edge grind and/or polish in addition to, or as an alternative to, the edge adhesive. In one embodiment, the edge adhesive is an epoxy or a silicone based adhesive. The edge adhesive may be of low viscosity so as to penetrate and seal microcracks and defects in the glass edge. An edge treatment may include a melted portion of the second substrate about the perimeter of the second substrate. An edge treatment may also include laser treatment remove defect portions of the edge and/or bevel the edge.

In one embodiment, the optical device laminate includes a top coat applied to the optical device, e.g. to a solid state and inorganic electrochromic device is applied a top coat to hermetically seal the device or otherwise protect it from the ambient. One embodiment is an IGU including an optical device laminate as described herein.

One embodiment is an optical device construct including: i) an annealed glass sheet; ii) a plurality of tempered glass lites laminated to the annealed glass sheet with a lamination adhesive; and iii) an optical device coated on the annealed glass sheet on the side opposite the lamination adhesive. In one embodiment, the annealed glass sheet is low sodium annealed glass between about 0.5 mm and about 2.0 mm thick, in another embodiment the annealed glass sheet is low sodium annealed glass less than 0.3 mm thick, in yet another embodiment the annealed glass sheet is low sodium annealed glass less 0.2 mm thick, and in still yet another embodiment the annealed glass sheet is low sodium annealed glass less than 0.1 mm thick. In one embodiment, the lamination adhesive is a silicone based lamination adhesive capable of withstanding temperatures of between about 300°C and 450°C. The optical device may be a solid state and inorganic electrochromic device.

In certain embodiments, the optical device construct further includes: iv) a plurality of spacers registered with each of the plurality of tempered glass lites and adhered to the annealed glass sheet; and v) a plurality of mate lites, each registered with one of the plurality of spacers and adhered thereto, thereby forming a plurality if IGU constructs sharing the annealed glass sheet. One embodiment is a plurality of IGU constructs that share a common sheet of annealed glass. In one embodiment, the annealed glass is thin flexible low sodium annealed glass e.g. as described herein.

As described, e.g. in relation to **Figure 4A-E,** EC devices may have two bus bars, one for each transparent conducting layer. However, methods herein also include fabrication of devices having more than one bus bar for each transparent conducting layer, specifically bus bars on opposing sides of each of the first and second conductor layer. This may be particularly important when fabricating larger EC devices that would otherwise require longer switching times due to the sheet resistance and having large-area devices.

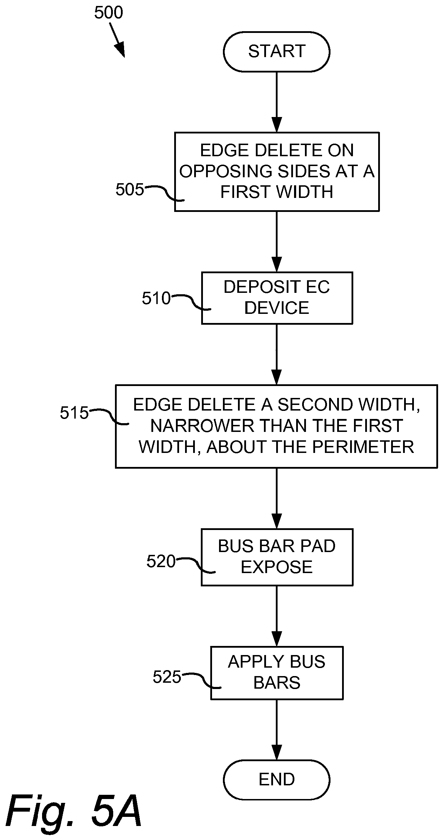

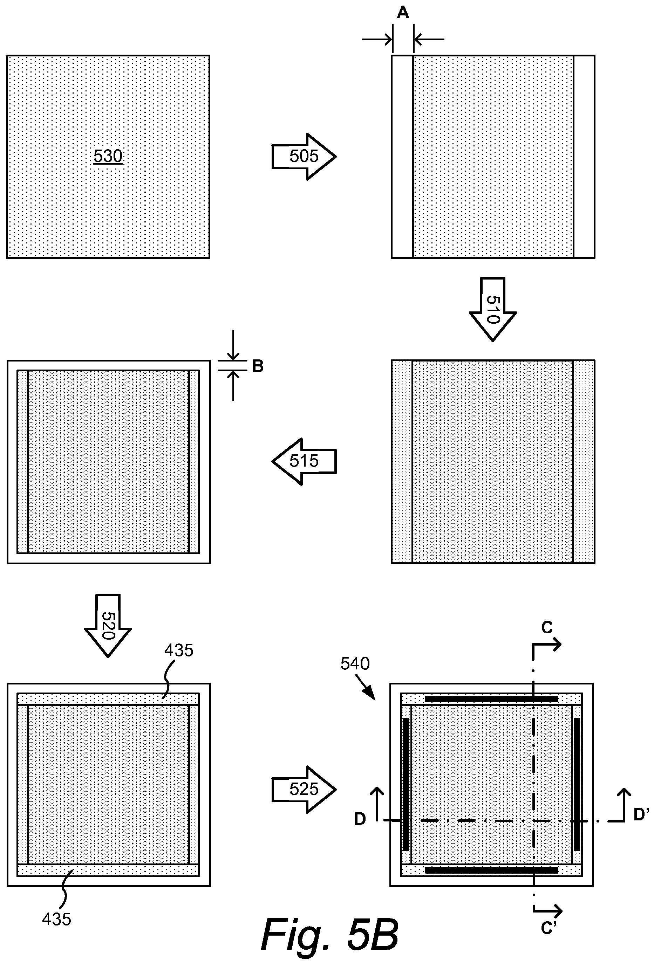

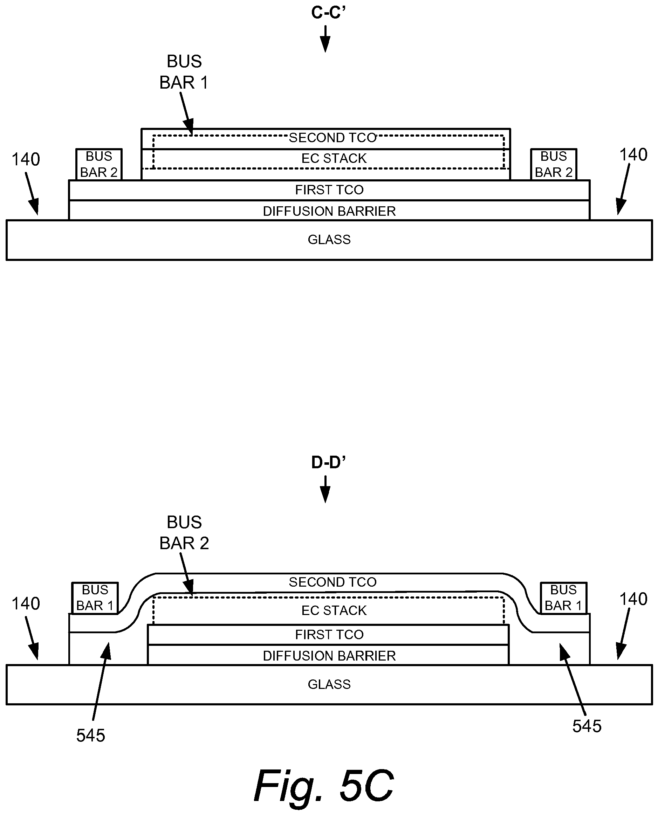

**Figure 5A** describes aspects of a process flow, **500,** for fabricating an optical device have opposing bus bars on each of the first and second conductor layers, according to embodiments. For illustration, **Figure 5B** includes top views depicting the process flow described in relation to **Figure 5A** as it relates to fabrication of a rectangular electrochromic device. **Figure 5C** shows cross-sections of the electrochromic lite described in relation **to** **Figure 5B****.**

Referring to **Figures 5A** and **5B****,** process flow **500** begins with removing the first width **A** of the first conducting layer from two opposing sides at the perimeter of the substrate, see **505.** As described above, this may include removal of a diffusion barrier or not. A substrate with a first conductor layer, **530,** is depicted. After step **505,** two opposing edge portions of the substrate (or diffusion barrier) are exposed. Edge taper and polish steps may be performed as described in relation to **Figures 4A** and **4B****.** The one or more material layers of the device and the second conductor layer (and optionally a moisture barrier) are applied to the substrate, see **510.** A second width **B** is removed from the entire perimeter of the substrate, see **515.** In this example, two BPE's, **435,** are fabricated, see **520.** Thus in accord with methods described above, the at least one exposed portion of the first conducting layer includes a pair of exposed portions fabricated along the lengths of the opposing sides of the optical device from which the first width was not removed in **505.** Bus bars are applied, see **525,** to make device **540** (thus, for example, in accord with methods described above, applying the at least one second bus bar to the second conducting layer includes applying a pair of second bus bars, each of the pair of second bus bars on opposing lengths of the second conducting layer and over areas where the first conducting layer was removed in **505**). **Figure 5B** indicates cross-sections **C-C'** and **D-D'** of device **540.** Drawings of the cross-sectional views of device **540** at **C-C'** and **D-D'** are shown in more detail in **Figure 5C****.**

**Figure 5C** shows cross-sections **C-C'** and **D-D'** of device **540.** In this example, the diffusion barrier was removed when width **A** and width **B** were removed. Specifically, perimeter area **140** is free of first conductor layer and diffusion barrier; although in one embodiment the diffusion barrier is left intact to the edge of the substrate about the perimeter on one or more sides. In another embodiment, the diffusion barrier is co-extensive with the one or more material layers and the second conductor layer (thus width **A** is fabricated at a depth to the diffusion barrier, and width **B** is fabricated to a depth sufficient to remove the diffusion barrier). In this example, there is an overlapping portion, **545,** of the one or more material layers only on opposing sides of the functional device. On both of these overlapping portions, on the second TCO, bus bars 1 are fabricated. In one embodiment, a vapor barrier layer is fabricated co-extensive with the second conductor layer. In this embodiment, two portions of the vapor barrier are removed in order to expose the second conductor layer for bus bars 1. These exposed portions are analogous to areas **435,** the BPEs for bus bars 2.

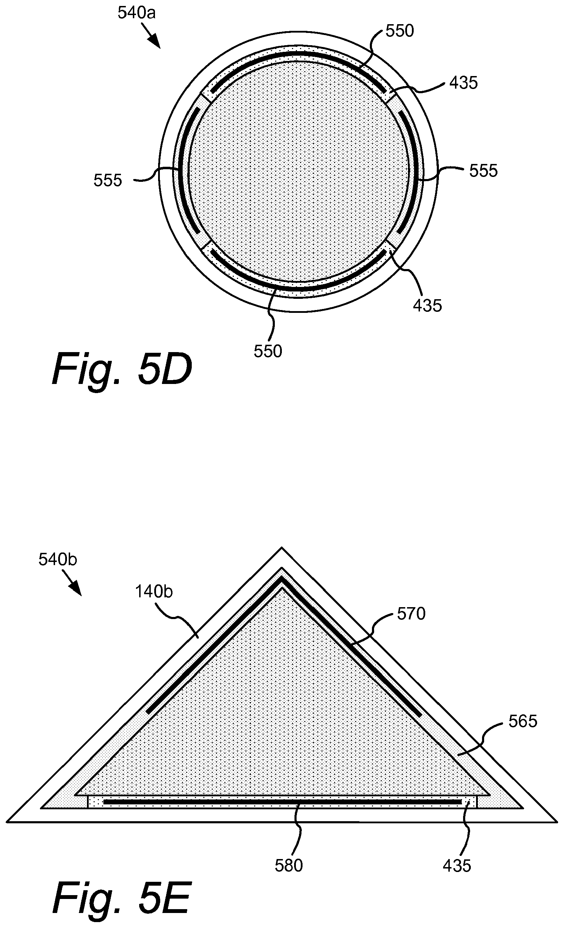

**Figure 5D** depicts an electrochromic device, **540a,** analogous to rectangular device **540.** Bus bars **550** are on the first conductor layer and bus bars **555** are on the second conductor layer. Thus, the BPEs **435** are fabricated on opposing sides of the circular area and analogous opposing bus bars are applied to the second conductor layer.

**Figure 5E** depicts an electrochromic device, **540b,** in this example a triangular shaped device. In this example, area **140b** is analogous to areas **140** and **140a** in previously described devices. Device **540b** has one angled bus bar, **570,** and one linear bus bar, **580.** In this example, angled bus bar **570** is on the region, **565,** of the second conductor layer that is not over the first conductor layer, and linear bus bar **580** is on the BPE, **435.** Triangular optical devices are not limited to this particular configuration, e.g., the BPE could be along two orthogonal sides and have the angled bus bar, and the linear bus bar could be on the second conductor layer. The point is that methods described herein can be used to fabricate optical devices of virtually any shape. Also, various masking steps may be used to fabricate devices as described herein, although masking adds extra steps. Other embodiments include optical devices.

One embodiment is an optical device including: (i) a first conductor layer on a substrate, the first conductor layer including an area less than that of the substrate, the first conductor layer surrounded by a perimeter area of the substrate which is substantially free of the first conductor layer; (ii) one or more material layers including at least one optically switchable material, the one or more material layers configured to be within the perimeter area of the substrate and co-extensive with the first conductor layer but for at least one exposed area of the first conductor layer, the at least one exposed area of the first conductor layer free of the one or more material layers; and (iii) a second conductor layer on the one or more material layers, the second conductor layer transparent and co-extensive with the one or more material layers, where the one or more material layers and the second conductor layer overhang the first conductor layer but for the at least one exposed area of the first conductor layer. In one embodiment, the optical device further includes a vapor barrier layer coextensive with the second conductor layer. There may be a diffusion barrier between the substrate and the first conductor layer. The perimeter area of the substrate can include the ion diffusion barrier. In one embodiment, the at least one optically switchable material is an electrochromic material. In one embodiment, the substrate and the first conductor layer are also transparent. In one embodiment, the at least one exposed area of the first conductor layer includes a strip proximate the perimeter area of the substrate. The device may include a first bus bar on and within the area of the strip. The device may also include a second bus bar on the second conductor layer, the second bus bar configured to be on or disposed on a portion of the second conducting layer that does not cover the first conducting layer, the portion proximate the perimeter area and opposite the first bus bar. In one embodiment, the first and second conductor layers and the one or more material layers are all solid-state and inorganic. In one embodiment, the substrate is float glass, tempered or untempered, and the first conducting layer includes tin oxide, e.g. fluorinated tin oxide. In one embodiment, the substrate is registered with a second substrate in an IGU. In one embodiment, any otherwise exposed areas of the first conducting layer are configured to be within the primary seal of the IGU, the bus bars may also be configured to be within the primary seal of the IGU as well as the area of the second conductor layer that is not over the first conductor layer. The optical device may be rectangular, round, oval, triangular and the like.

In certain embodiments, opposing bus bars on each conductor layer are used. In one embodiment, the at least one exposed area of the first conductor layer includes a pair of strips, each strip of the pair of strips on opposing sides of the first conductor layer proximate the perimeter area of the transparent substrate. Depending upon the shape of the device, the strips may be linear or curved, for example. The strips can include a first pair of bus bars, each of the first pair of bus bars on and within the area of each strip of the pair of strips. A second pair of bus bars on the second conductor layer can be included, each of the second pair of bus bars configured to be on or disposed on each of two portions of the second conducting layer that do not cover the first conducting layer, each of the two portions proximate the perimeter area and on opposing sides of the second conducting layer.

The first and second conductor layers and the one or more material layers of optical devices described herein may be all solid-state and inorganic. In one embodiment, the substrate is float glass, tempered or untempered, and the first conducting layer includes tin oxide, e.g. fluorinated tin oxide. The substrate may be registered in an IGU with an additional EC device or not. As described, the bus bars, any laser scribes, device edges, and/or exposed portions of the first conductor layer may be sealed in the primary seal of the IGU. Dual EC device IGU's are described in US Patent Application, serial number 12/851,514 (now U.S. Patent No. 8,270,059), filed August 5, 2010, and titled "Multi-pane Electrochromic Windows,". One embodiment is a multi-pane window as described in that application, having one or more EC devices as described herein. One embodiment is any optical device described herein which does not include a laser isolation scribe. One embodiment is any optical device described herein which does not include an inactive portion of the optical device.

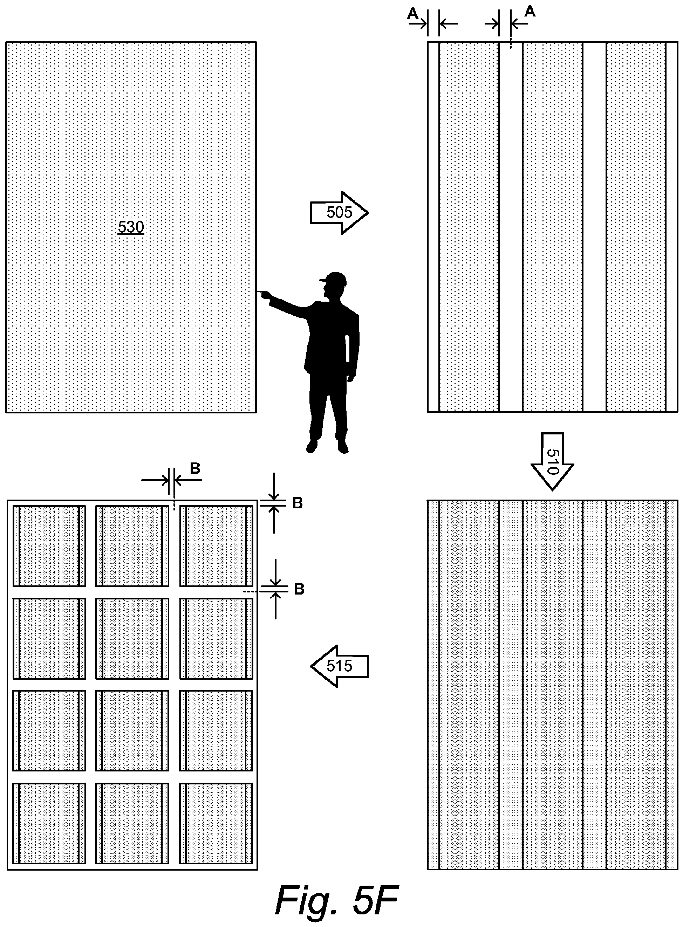

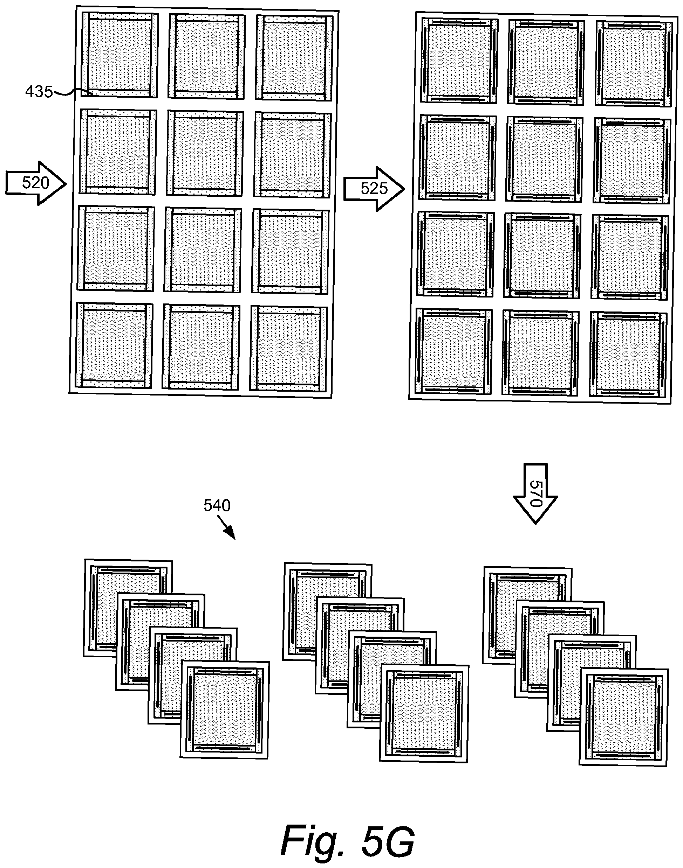

As described above in relation to **Figures 4H** and **4I,** some embodiments include coat then cut fabrication. **Figures 5F** and **5G** depict a process flow similar to that described in relation to **Figure 5A** and carried out on a large-area substrate as applied to coat then cut methods of disclosed embodiments. This is an example of fabricating EC devices having two opposing bus bars on each transparent conducting layer. The lamination embodiments described above also apply to the coat then cut embodiments described below.

Referring to **Figure 5F****,** a large area substrate, **530,** has a transparent conducting layer thereon (as indicated by the dotted pattern). During operation **505,** an edge delete is performed at a first width **A.** The edge delete between what will be neighboring EC devices is made to be double of **A,** so that each EC device has an equivalent edge delete width **A.** In operation **510,** the remaining EC device layers are applied. Next, see **515,** the edge delete at width **B,** narrower than width **A,** is performed. In this example, the isolated EC device precursors are analogous to those described in **Figure 5B** after operation **515.**

Referring to **Figure 5G****,** operation **520** creates bus bar pad expose regions **435,** in this example, two for each EC device. Operation **525** includes application of bus bars, two for each of the transparent conductor layers. In operation **570,** the large area substrate is cut to produce, in this example, 12 EC devices **540.** As described above in relation to **Figures 4H-J,** these may be incorporated into IGUs, or laminated directly, for example, using a thin flexible substrate.

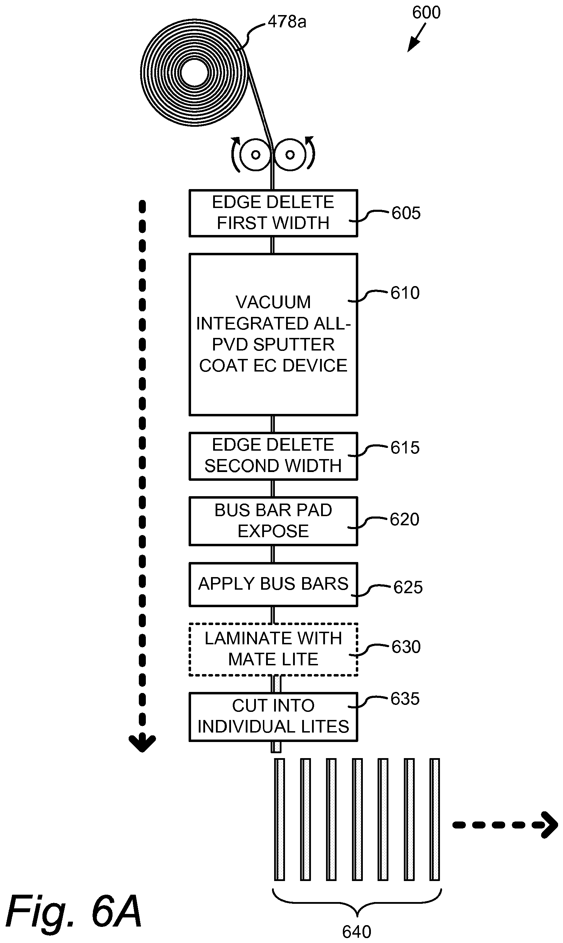

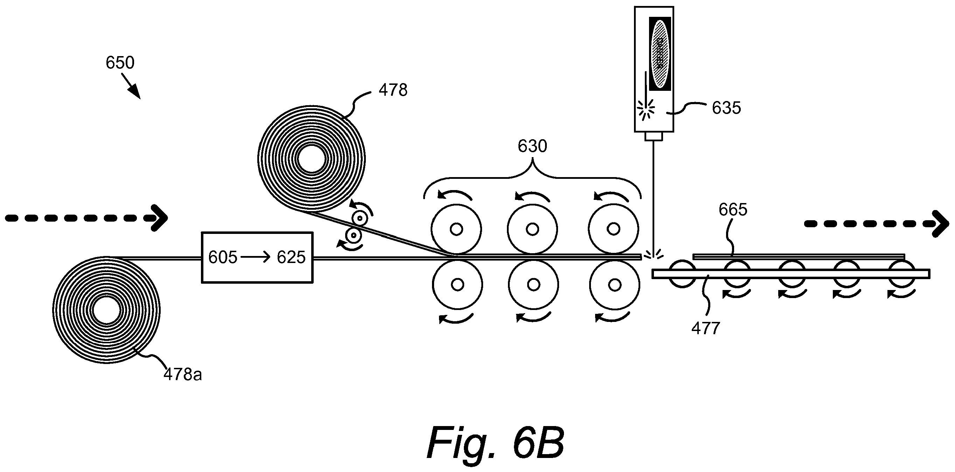

As described above, thin flexible substrates may be used as strengthening panes (mate lites) for EC lites, e.g. EC lites fabricated as described herein. In certain embodiments, thin flexible substrates are used as *substrates* for the EC lite fabrication process. For example, one embodiment includes any of the EC device fabrication methods described herein performed on a thin flexible substrate as described herein, e.g. Gorilla^{®} Glass or Willow^{™} Glass. In some embodiments, fabrication is performed using a roll-to-roll fabrication scheme. Examples of this embodiment are described below in relation to **Figures 6A** and **6B****.**

**Figure 6A** depicts roll-to-roll fabrication, **600,** of electrochromic devices on thin flexible substrates and optional lamination with rigid substrates. **Figure 6A** is a fusion of a chart-type process flow with block diagrams including functional descriptions of apparatus and device features. The actual apparatus for performing the described fabrication may be in any orientation, but in one embodiment, the flexible substrate is preferably vertical. In another embodiment, the substrate is vertical and the process operations are performed in a "top down" format, where the substrate is fed into the line from a first height, passes downward through the fabrication process, and ends at a second height, lower than the first height. In this example, a thin flexible substrate, **478a** (as described above), includes a transparent conductive oxide layer. An example of this substrate is Willow Glass^{™}, which is commercially available with an ITO coating from Corning, Incorporated of Corning, New York. The heavy dotted arrow in Figure 6A indicates the direction of motion of the flexible substrate through various modules.

First, the flexible substrate is fed into an edge deletion module, **605.** In this module, the edge deletion of a first width (as described herein) from the transparent conductor layer is performed. The substrate may optionally be cleaned (not depicted in **Figure 6A**) of any contaminants resulting from the first edge delete. Also, in accord with embodiments described herein, e.g. in relation to **Figures 4A** and **4B****,** the transparent conducting layer may be given an edge taper and/or polishing process (not depicted). Next, the thin flexible substrate enters a coater, **610,** where the remaining layers of the EC device are deposited, in this example, using a vacuum integrated all-PVD sputter apparatus. Such apparatus are described in US Patent number 8,243,357, titled, "Fabrication of Low Defectivity Electrochromic Devices," filed on May 11, 2011. After the flexible substrate is coated with the EC device, a second edge delete (as described herein) is carried out, in this example, in a module **615.** Edge deletion may optionally be followed by edge taper (not shown). Next is BPE fabrication, **620,** followed by application of bus bars, see **625.** Optionally, the flexible substrate may be laminated with a mate lite, see **630,** e.g. as described in relation to **Figure 4J****.** The mate lite may be flexible as the substrate, or a rigid substrate, such as annealed glass or a polymeric substrate. In this example, the flexible substrate is laminated with annealed glass. The flexible substrate is then cut, either to match the rigid substrate to which it is laminated (as depicted) which produces laminated EC devices **640,** or as a monolithic flexible EC device (not shown). In the latter embodiment, the flexible EC device may be coated with a vapor barrier and/or encapsulation layer prior to or after cutting from the bulk material.

Depending upon the width of the flexible substrate, there may be one or more EC devices fabricated along the width of the flexible substrate as it passes through modules/process flows **605-635.** For example, if the flexible substrate is as wide as a large area float glass substrate as described herein, lamination with the large area substrate will produce a corresponding large-area laminate. Individual EC lite laminates can be cut from that large area laminate, e.g. as described above.

In some embodiments, a flexible EC device laminate is desired. In one embodiment, the flexible substrate bearing the plurality of EC devices is itself laminated with another flexible substrate. **Figure 6B** depicts fabrication, **650,** of electrochromic devices on flexible glass substrates and subsequent lamination with flexible substrates. In this example, flexible substrate **478a** (as described above) having a transparent conductor layer thereon is fed through fabrication line processes **605** - **625** as described in relation to **Figure 6A****.** Then, the flexible substrate, having a plurality of EC devices thereon, is laminated with another flexible substrate, in this example substrate **478** as described above, via appropriate application of lamination adhesive and rollers **630.** The newly formed laminate is cut, e.g. via laser, see **635,** to form individual flexible EC laminates. **665,** which, e.g., can pass along conveyer **477** for further processing. As described above, the flexible substrate "mate lite" may be patterned with apertures to accommodate the bus bars, or ablated to reveal TCO and the bus bars (process **625**) added after lamination, either before or after cutting into individual laminated EC lites.

Although the foregoing embodiments have been described in some detail to facilitate understanding, the described embodiments are to be considered illustrative and not limiting. It will be apparent to one of ordinary skill in the art that certain changes and modifications can be practiced within the scope of the appended claims.

## Claims

1. A method of fabricating an optical device, the method comprising:
a) receiving a first substrate comprising a material selected from the group consisting of a tempered glass, a heat strengthened glass, a chemically strengthened glass and a polymer;
b) laminating a second substrate to the first substrate to form a laminate using a lamination adhesive, wherein the second substrate is a thin flexible low-sodium annealed glass, wherein the lamination forms a permanent lamination bond; and
c) fabricating the optical device on an outward-facing surface of the thin flexible low-sodium annealed glass of the laminate, wherein fabricating the optical device comprises heating at temperatures of between 300°C and 450°C.

2. The method of claim 1, wherein the optical device is a solid state and inorganic electrochromic device, optionally wherein the first substrate is a tempered glass lite, further optionally wherein the tempered glass lite is between 2 mm and 25 mm thick, further optionally comprising applying a protective top coat to the solid state and inorganic electrochromic device of the laminate after c).

3. The method of claim 2, wherein the lamination adhesive is a silicone-based lamination adhesive capable of withstanding temperatures of between 300°C and 450°C.

4. The method of claim 3, wherein the second substrate is larger than the first substrate and wherein b) further comprises registering the first substrate and the second substrate to be centered with respect to each other, and wherein after b) there is an overhang of the second substrate about a perimeter of the first substrate.

5. The method of claim 4, wherein the first substrate is between 30 cm and 300 cm on its largest dimension, and the second substrate is a ribbon between ½ meter and 3 meter wide and between 10 meter and 300 meter long.

6. The method of claim 5, wherein a plurality of first substrates are laminated to the second substrate in b).

7. The method of claim 5, further comprising cutting an excess of the second substrate from about a perimeter of the laminate.

8. The method of claim 1 or 7, wherein lamination surfaces of the first substrate and the second substrate are coextensive.

9. The method of claim 1, wherein the second substrate is set back from the first substrate about a perimeter of the laminate.

10. The method of claim 7, wherein cutting the excess of the second substrate from about the perimeter of the laminate comprises using at least one of laser cutting, electrothermal cutting and mechanical cutting.

11. The method of claim 7, further comprising applying an edge treatment to the perimeter of the second substrate of the laminate, optionally wherein:
(i) the edge treatment comprises application of an edge adhesive, optionally wherein the edge adhesive is an epoxy-based or a silicone-based adhesive; or
(ii) the edge treatment comprises an edge grind and/or a polish; or
(iii) the edge treatment comprises both an edge grind and application of an edge adhesive, optionally wherein the edge adhesive is an epoxy-based adhesive or a silicone-based adhesive; or
(iv) the edge treatment comprises heating the edge to melt an outer portion so as to reduce or eliminate microcracks and defects in the edge

12. The method of claim 7, further comprising applying an edge treatment to the perimeter of the second substrate of the laminate, wherein the edge treatment comprises application of an edge adhesive, wherein the edge adhesive is an epoxy-based adhesive or a silicone-based adhesive, wherein:
(i) the edge adhesive comprises a low viscosity portion configured to penetrate and seal microcracks and defects in the edge of
(ii) application of the edge adhesive is a two-part application comprising application of a low viscosity portion, and application of a more viscous portion thereafter.

13. The method of any one of claims 1 through 12, further comprising cleaning the laminate between b) and c).

14. The method of any one of claims 1 through 13, further comprising fabricating an insulated glass unit (IGU) from the laminate, wherein the optical device is within a sealed volume of the IGU.

15. An optical device laminate comprising:
i) a first substrate comprising a material selected from the group consisting of a tempered glass, a heat strengthened glass, a chemically strengthened glass and a polymer;
ii) a second substrate laminated to the first substrate, wherein the second substrate is a thin flexible low-sodium annealed glass;
iii) a lamination adhesive between the first and second substrates, the lamination adhesive capable of withstanding temperatures of between 300°C and 450°C, wherein the lamination adhesive forms a permanent lamination bond; and
iv) an optical device disposed on an outward-facing surface of the second substrate, wherein the optical device is a solid state and inorganic electrochromic device.

16. The optical device laminate of claim 15, wherein the second substrate is between 0.5 mm and 2.0 mm thick; or wherein the second substrate is less than 0.3 mm thick, optionally less than 0.2 mm thick or less than 0.1 mm thick.

17. The optical device laminate of claim 15, further comprising a protective top coat applied to the solid state and inorganic electrochromic device.

18. The optical device laminate of claim 15, wherein the first substrate is a tempered glass lite, optionally wherein the tempered glass lite is between 2 mm and 25 mm thick.

19. The optical device laminate of claim 15, wherein:
the second substrate is larger than the first substrate such that there is an overhang of the second substrate about a perimeter of the first substrate; or
the second substrate is set back from the first substrate about a perimeter of the optical device laminate.

20. The optical device laminate of claim 15, wherein a perimeter of the second substrate comprises an edge treatment, optionally wherein:
(i) the edge treatment comprises application of an edge adhesive, optionally wherein the edge adhesive is an epoxy or a silicone based adhesive and further optionally wherein the edge adhesive comprises a low viscosity so as to penetrate and seal microcracks and defects in an edge; or
(ii) the edge treatment comprises an edge grind and/or a polish; or
(iii) the edge treatment comprises both an edge grind and application of an edge adhesive, optionally wherein the edge adhesive is an epoxy-based adhesive or a silicone-based adhesive, and further optionally wherein the edge adhesive comprises a low viscosity adhesive configured to penetrate and seal microcracks and defects in an edge; or
(iv) the edge treatment comprises a melted portion of the second substrate about a perimeter of the second substrate; or
(v) the edge treatment comprises laser treatment configured to remove defect portions of an edge and/or bevel the edge.

21. An insulated glass unit (IGU) comprising the optical device laminate of any one of claims 15 through 20.

## Patentansprüche

1. Verfahren zum Herstellen einer optischen Vorrichtung, das Verfahren umfassend:
a) Aufnehmen eines ersten Substrats, umfassend ein Material, das aus der Gruppe ausgewählt ist, bestehend aus einem gehärteten Glas, einem wärmeverstärkten Glas, einem chemisch verstärkten Glas und einem Polymer;
b) Laminieren eines zweiten Substrats auf das erste Substrat, um ein Laminat unter Verwendung eines Laminationsklebstoffs auszubilden, wobei das zweite Substrat ein dünnes flexibles natriumarmes vergütetes Glas ist, wobei die Lamination eine permanente Laminationsverbindung ausbildet; und
c) Herstellen der optischen Vorrichtung auf einer nach außen gerichteten Oberfläche des dünnen flexiblen natriumarmen vergüteten Glases des Laminats, wobei das Herstellen der optischen Vorrichtung ein Erwärmen bei Temperaturen von zwischen 300 °C und 450 °C umfasst.

2. Verfahren nach Anspruch 1, wobei die optische Vorrichtung eine Festkörper- und anorganische elektrochrome Vorrichtung ist, optional wobei das erste Substrat eine gehärtete Glasscheibe ist, ferner optional wobei die gehärtete Glasscheibe zwischen 2 mm und 25 mm dick ist, ferner optional umfassend ein Aufbringen einer Schutzoberschicht auf die Festkörper- und anorganische elektrochrome Vorrichtung des Laminats nach c).

3. Verfahren nach Anspruch 2, wobei der Laminationsklebstoff ein silikonbasierter Laminationsklebstoff ist, der Temperaturen von zwischen 300 °C und 450 °C standhalten kann.

4. Verfahren nach Anspruch 3, wobei das zweite Substrat größer als das erste Substrat ist, und wobei b) ferner ein Registrieren des ersten Substrats und des zweiten Substrats umfasst, um hinsichtlich zueinander zentriert zu werden, und wobei nach b) ein Überhang des zweiten Substrats um einen Umfang des ersten Substrats vorliegt.

5. Verfahren nach Anspruch 4, wobei das erste Substrat zwischen 30 cm und 300 cm auf seiner größten Abmessung ist und das zweite Substrat ein Band, das zwischen ½ Meter und 3 Meter breit und zwischen 10 Meter und 300 Meter lang ist.

6. Verfahren nach Anspruch 5, wobei eine Vielzahl von ersten Substraten in b) auf das zweite Substrat laminiert werden.

7. Verfahren nach Anspruch 5, ferner umfassend ein Schneiden eines Überschusses des zweiten Substrats von um einen Umfang des Laminats.

8. Verfahren nach Anspruch 1 oder 7, wobei die Laminationsoberflächen des ersten Substrats und des zweiten Substrats koextensiv sind.

9. Verfahren nach Anspruch 1, wobei das zweite Substrat von dem ersten Substrat um einen Umfang des Laminats zurückversetzt ist.

10. Verfahren nach Anspruch 7, wobei das Schneiden des Überschusses des zweiten Substrats von um den Umfang des Laminats ein Verwenden von mindestens einem von Laserschneiden, elektrothermischem Schneiden und mechanischem Schneiden umfasst.

11. Verfahren nach Anspruch 7, ferner umfassend das Aufbringen einer Kantenbehandlung auf den Umfang des zweiten Substrats des Laminats, optional wobei:
(i) die Kantenbehandlung eine Aufbringung eines Kantenklebstoffs umfasst, optional wobei der Kantenklebstoff ein epoxidbasierter oder ein silikonbasierter Klebstoff ist; oder
(ii) die Kantenbehandlung ein Kantenschleifen und/oder eine Polierung umfasst; oder
(iii) die Kantenbehandlung sowohl ein Kantenschleifen als auch eine Aufbringung eines Kantenklebstoffs umfasst, optional wobei der Kantenklebstoff ein epoxidbasierter Klebstoff oder ein silikonbasierter Klebstoff ist; oder
(iv) die Kantenbehandlung das Erwärmen der Kante umfasst, um einen äußeren Abschnitt zu schmelzen, um Mikrorisse und -fehler in der Kante zu reduzieren oder zu eliminieren.

12. Verfahren nach Anspruch 7, ferner umfassend das Aufbringen einer Kantenbehandlung auf den Umfang des zweiten Substrats des Laminats, wobei die Kantenbehandlung die Aufbringung eines Kantenklebstoffs umfasst, wobei der Kantenklebstoff ein epoxidbasierter Klebstoff oder ein silikonbasierter Klebstoff ist, wobei:
(i) der Kantenklebstoff einen Anteil mit niedriger Viskosität umfasst, der konfiguriert ist, um Mikrorisse und -fehler in der Kante zu durchdringen oder zu versiegeln, oder
(ii) die Aufbringung des Kantenklebstoffs eine zweiteilige Aufbringung ist, umfassend die Aufbringung eines Anteils mit niedriger Viskosität und die Aufbringung eines stärker viskosen Anteils danach.

13. Verfahren nach einem der Ansprüche 1 bis 12, ferner umfassend ein Reinigen des Laminats zwischen b) und c).

14. Verfahren nach einem der Ansprüche 1 bis 13, ferner umfassend das Herstellen eines Isolierglasfensters (IGU) aus dem Laminat, wobei die optische Vorrichtung innerhalb eines versiegelten Raums des IGU liegt.

15. Laminat für die optische Vorrichtung, umfassend:
i) ein erstes Substrat, umfassend ein Material, das aus der Gruppe ausgewählt ist, bestehend aus einem gehärteten Glas, einem wärmeverstärkten Glas, einem chemisch verstärkten Glas und einem Polymer;
ii) ein zweites Substrat, das auf das erste Substrat laminiert ist, wobei das zweite Substrat ein dünnes flexibles natriumarmes vergütetes Glas ist;
iii) einen Laminationsklebstoff zwischen dem ersten und dem zweiten Substrat, wobei der Laminationsklebstoff Temperaturen von zwischen 300 °C und 450 °C standhalten kann, wobei der Laminationsklebstoff eine permanente Laminationsverbindung ausbildet; und
iv) eine optische Vorrichtung, die auf einer nach außen gerichteten Oberfläche des zweiten Substrats angeordnet ist, wobei die optische Vorrichtung eine Festkörper- und anorganische elektrochrome Vorrichtung ist.

16. Laminat für die optische Vorrichtung nach Anspruch 15, wobei das zweite Substrat zwischen 0,5 mm und 2,0 mm dick ist; oder wobei das zweite Substrat weniger als 0,3 mm dick, optional weniger als 0,2 mm dick oder weniger als 0,1 mm dick ist.

17. Laminat für die optische Vorrichtung nach Anspruch 15, ferner umfassend eine Schutzoberschicht, die auf die Festkörper- und anorganische elektrochrome Vorrichtung aufgebracht ist.

18. Laminat für die optische Vorrichtung nach Anspruch 15, wobei das erste Substrat eine gehärtete Glasscheibe ist, optional wobei die gehärtete Glasscheibe zwischen 2 mm und 25 mm dick ist.

19. Laminat für die optische Vorrichtung nach Anspruch 15, wobei:
das zweite Substrat größer als das erste Substrat ist, derart, dass ein Überhang des zweiten Substrats um einen Umfang des ersten Substrats vorliegt; oder
das zweite Substrat von dem ersten Substrat um einen Umfang des Laminats für die optische Vorrichtung zurückversetzt ist.

20. Laminat für die optische Vorrichtung nach Anspruch 15, wobei ein Umfang des zweiten Substrats eine Kantenbehandlung umfasst, optional wobei:
(i) die Kantenbehandlung die Aufbringung eines Kantenklebstoffs umfasst, optional wobei der Kantenklebstoff ein epoxidbasierter oder ein silikonbasierter Klebstoff ist, und ferner optional wobei der Kantenklebstoff eine niedrige Viskosität umfasst, um Mikrorisse und -fehler in einer Kante zu durchdringen und zu versiegeln; oder
(ii) die Kantenbehandlung ein Kantenschleifen und/oder eine Polierung umfasst; oder
(iii) die Kantenbehandlung sowohl ein Kantenschleifen als auch eine Aufbringung eines Kantenklebstoffs umfasst, optional wobei der Kantenklebstoff ein epoxidbasierter Klebstoff oder ein silikonbasierter Klebstoff ist, und ferner optional wobei der Kantenklebstoff einen Klebstoff mit niedrige Viskosität umfasst, der konfiguriert ist, um Mikrorisse und -fehler in einer Kante zu durchdringen und zu versiegeln; oder
(iv) die Kantenbehandlung einen geschmolzenen Abschnitt des zweiten Substrats um einen Umfang des zweiten Substrats umfasst; oder
(v) die Kantenbehandlung eine Laserbehandlung umfasst, die konfiguriert ist, um Fehlerabschnitte einer Kante zu entfernen und/oder die Kante abzuschrägen.

21. Isolierglasfenster (IGU), umfassend das Laminat für die optische Vorrichtung nach einem der Ansprüche 15 bis 20.

## Revendications

1. Procédé de fabrication d'un dispositif optique, le procédé comprenant :
a) la réception d'un premier substrat comprenant un matériau choisi dans le groupe constitué par un verre trempé, un verre renforcé thermiquement, un verre renforcé chimiquement et un polymère ;
b) la stratification d'un second substrat sur le premier substrat pour former un stratifié en utilisant un adhésif de stratification, dans lequel le second substrat est un verre mince flexible recuit à faible teneur en sodium, dans lequel la stratification forme une liaison de stratification permanente ; et
c) la fabrication du dispositif optique sur une surface tournée vers l'extérieur du verre mince flexible recuit à faible teneur en sodium du stratifié, dans lequel la fabrication du dispositif optique comprend le chauffage à des températures entre 300 °C et 450 °C.

2. Procédé selon la revendication 1, dans lequel le dispositif optique est un dispositif électrochromique à l'état solide et inorganique, facultativement dans lequel le premier substrat est une feuille de verre trempé, en outre facultativement dans lequel la feuille de verre trempé a une épaisseur entre 2 mm et 25 mm, en outre facultativement comprenant l'application d'une couche supérieure protectrice sur le dispositif électrochromique à l'état solide et inorganique du stratifié après c).

3. Procédé selon la revendication 2, dans lequel l'adhésif de stratification est un adhésif de stratification à base de silicone capable de supporter des températures entre 300 °C et 450 °C.

4. Procédé selon la revendication 3, dans lequel le second substrat est plus grand que le premier substrat et dans lequel b) comprend en outre l'alignement du premier substrat et du second substrat pour qu'ils soient centrés l'un par rapport à l'autre, et dans lequel après b) il existe un débordement du second substrat autour du périmètre du premier substrat.

5. Procédé selon la revendication 4, dans lequel le premier substrat mesure entre 30 cm et 300 cm sur sa plus grande dimension, et le second substrat est un ruban entre ½ mètre et 3 mètres de large et entre 10 mètres et 300 mètres de long.

6. Procédé selon la revendication 5, dans lequel une pluralité de premiers substrats sont stratifiés sur le second substrat dans b).

7. Procédé selon la revendication 5, comprenant en outre la découpe d'un excédent du second substrat à partir d'autour d'un périmètre du stratifié.

8. Procédé selon la revendication 1 ou 7, dans lequel des surfaces de stratification du premier substrat et du second substrat sont coextensives.

9. Procédé selon la revendication 1, dans lequel le second substrat est en retrait par rapport au premier substrat autour d'un périmètre du stratifié.

10. Procédé selon la revendication 7, dans lequel la découpe de l'excédent du second substrat à partir d'autour du périmètre du stratifié comprend l'utilisation d'au moins l'une parmi une découpe au laser, une découpe électrothermique et une découpe mécanique.

11. Procédé selon la revendication 7, comprenant en outre l'application d'un traitement de bord au périmètre du second substrat du stratifié, facultativement dans lequel :
(i) le traitement de bord comprend l'application d'un adhésif de bord, facultativement dans lequel l'adhésif de bord est un adhésif à base d'époxy ou à base de silicone ; ou
(ii) le traitement de bord comprend un meulage et/ou un polissage de bord ; ou
(iii) le traitement de bord comprend à la fois un meulage de bord et l'application d'un adhésif de bord, facultativement dans lequel l'adhésif de bord est un adhésif à base d'époxy ou un adhésif à base de silicone ; ou
(iv) le traitement de bord comprend le chauffage du bord pour faire fondre une partie externe de manière à réduire ou éliminer des microfissures et des défauts dans le bord

12. Procédé selon la revendication 7, comprenant en outre l'application d'un traitement de bord au périmètre du second substrat du stratifié, dans lequel le traitement de bord comprend l'application d'un adhésif de bord, dans lequel l'adhésif de bord est un adhésif à base d'époxy ou un adhésif à base de silicone, dans lequel :
(i) l'adhésif de bord comprend une partie de faible viscosité configurée pour pénétrer et sceller des microfissures et des défauts dans le bord ou
(ii) l'application de l'adhésif de bord est une application en deux parties comprenant l'application d'une partie de faible viscosité, et l'application d'une partie plus visqueuse après cela.

13. Procédé selon l'une quelconque des revendications 1 à 12, comprenant en outre le nettoyage du stratifié entre b) et c).

14. Procédé selon l'une quelconque des revendications 1 à 13, comprenant en outre la fabrication d'une unité de verre isolée (IGU) à partir du stratifié, dans lequel le dispositif optique est à l'intérieur d'un volume scellé de l'IGU.

15. Stratifié de dispositif optique comprenant :
i) un premier substrat comprenant un matériau choisi dans le groupe constitué par un verre trempé, un verre renforcé thermiquement, un verre renforcé chimiquement et un polymère ;
ii) un second substrat stratifié sur le premier substrat, dans lequel le second substrat est un verre mince flexible recuit à faible teneur en sodium ;
iii) un adhésif de stratification entre les premier et second substrats, l'adhésif de stratification étant capable de supporter des températures entre 300 °C et 450 °C, dans lequel l'adhésif de stratification forme une liaison de stratification permanente ; et
iv) un dispositif optique disposé sur une surface tournée vers l'extérieur du second substrat, dans lequel le dispositif optique est un dispositif électrochromique à l'état solide et inorganique.

16. Stratifié de dispositif optique selon la revendication 15, dans lequel le second substrat a une épaisseur entre 0,5 mm et 2,0 mm ; ou dans lequel le second substrat a une épaisseur inférieure à 0,3 mm, facultativement inférieure à 0,2 mm ou inférieure à 0,1 mm.

17. Stratifié de dispositif optique selon la revendication 15, comprenant en outre une couche supérieure protectrice appliquée sur le dispositif électrochromique à l'état solide et inorganique.

18. Stratifié de dispositif optique selon la revendication 15, dans lequel le premier substrat est une feuille de verre trempé, facultativement dans lequel la feuille de verre trempé a une épaisseur entre 2 mm et 25 mm.

19. Stratifié de dispositif optique selon la revendication 15, dans lequel :
le second substrat est plus grand que le premier substrat de telle sorte qu'il existe un débordement du second substrat autour d'un périmètre du premier substrat ; ou
le second substrat est en retrait par rapport au premier substrat autour d'un périmètre du stratifié de dispositif optique.

20. Stratifié de dispositif optique selon la revendication 15, dans lequel un périmètre du second substrat comprend un traitement de bord, facultativement dans lequel :
(i) le traitement de bord comprend l'application d'un adhésif de bord, facultativement dans lequel l'adhésif de bord est un adhésif à base d'époxy ou de silicone et en outre facultativement dans lequel l'adhésif de bord comprend une viscosité faible de manière à pénétrer et à sceller des microfissures et des défauts dans un bord ; ou
(ii) le traitement de bord comprend un meulage et/ou un polissage de bord ; ou
(iii) le traitement de bord comprend à la fois un meulage de bord et l'application d'un adhésif de bord, facultativement dans lequel l'adhésif de bord est un adhésif à base d'époxy ou un adhésif à base de silicone, et en outre facultativement dans lequel l'adhésif de bord comprend un adhésif de faible viscosité configuré pour pénétrer et sceller des microfissures et des défauts dans un bord ; ou
(iv) le traitement de bord comprend une partie fondue du second substrat autour d'un périmètre du second substrat ; ou
(v) le traitement de bord comprend un traitement au laser configuré pour éliminer des parties défectueuses d'un bord et/ou biseauter le bord.

21. Unité de verre isolée (IGU) comprenant le stratifié de dispositif optique selon l'une quelconque des revendications 15 à 20.
